# EUROPEAN PATENT APPLICATION

(11) **EP 4 603 522 A1**
(43) Date of publication of application: **20.08.2025**
(21) Application number: 23877109.1
(22) Date of filing: 22.09.2023
(51) Int. Cl.: C08F 290/06, C08G 18/38, C08G 18/48, C08G 18/66, C08K 5/151, C08L 75/04, G02B 1/04, G02C 7/02, G02C 7/10

(54) **OPTICAL MATERIAL COMPOSITION, CURED BODY, OPTICAL ARTICLE, LENS, AND SPECTACLES**

(30) Priority: 13.10.2022 JP 2022165062
(71) Applicant: TOKUYAMA CORPORATION, Yamaguchi 745-8648 (JP)
(72) Inventor: NOGUCHI, Takao, Shunan-shi, Yamaguchi 745-8648 (JP); MORI, Katsuhiro, Shunan-shi, Yamaguchi 745-8648 (JP)
(74) Representative: Papula Oy
(86) International application number: PCT/JP2023/034465
(87) International publication number: WO 2024/080103

(57) **Abstract**

The purpose of the present invention is to provide an optical material composition that enables excellent functional pigment properties, a cured body, an optical article, a lens and spectacles. One embodiment of the present invention provides an optical material composition. The optical material composition comprises: an optical material compound that is represented by formula (I); and at least one compound that is selected from the group consisting of compounds having a radical-polymerizable group, compounds having a polyaddition-reactive group, and compounds having a reactive group which reacts with the polyaddition-reactive group.

## Description

### TECHNICAL FIELD

This invention relates to an optical material composition, a cured product, an optical article, a lens, and glasses.

### BACKGROUND ART

Photochromic compounds are compounds that can reversibly take two or more isomeric forms with different absorption spectra upon irradiation with light including ultraviolet light such as sunlight. For example, photochromic compounds in a colorless or decolored state quickly change in color and are isomerized to a colored or color-developed state by irradiation with ultraviolet light. Photochromic compounds with such a property have been used as, for example, materials for lenses of light control sunglasses that are dark outdoors and transparent indoors. For example, the light control sunglasses use plastic lenses obtained by curing polymerizable compositions including the photochromic compounds. In order to enhance performance such as reactivity or durability of the photochromic compounds in the light control lenses, addition of various polymeric compounds to the polymerizable compositions has been investigated.

### Citation List

### Patent Document

Patent Document 1: PCT International Publication No. WO2021/241596
Patent Document 2: PCT International Publication No. WO2018/070383

### DISCLOSURE OF THE INVENTION

### Problems to be Solved by the Invention

An object of the present invention is to provide an optical material composition capable of realizing excellent performance of a functional dye, a cured product, an optical article, a lens, and glasses.

### Means for Solving the Problems

According to an embodiment, an optical material composition is provided. The optical material composition includes an optical material compound represented by Formula (I) and at least one compound selected from the group consisting of a compound having a radical-polymerizable group, a compound having a polyaddition-reactive group, and a compound having a reactive group reactive with the polyaddition-reactive group. 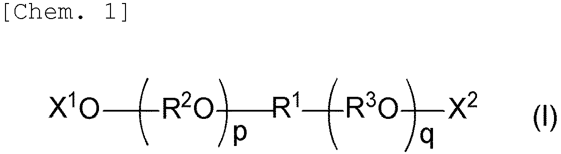
In Formula (I), p and q are each independently 1 or more and 43 or less;
p + q is 2 or more and 44 or less;
X¹ and X² are each independently a hydrogen atom, a mercaptoethyl group, a 3-mercaptopropanoyl group, an allyl group, an acryloyl group, or a methacryloyl group;
R¹ is a divalent group represented by Formula (Ia) or (Ib) below; and
R² and R³ are a methylene group or an ethylene group. 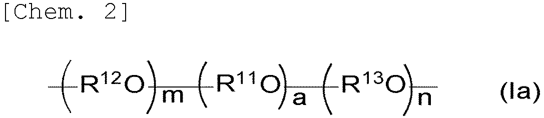
In Formula (Ia), R¹¹ is a linear or branched alkylene group having 2 or more and 10 or less carbon atoms;
R¹² and R¹³ are a group having a structure different from that of R¹¹;
R¹² and R¹³ are a linear or branched alkylene group having 3 or more and 10 or less carbon atoms;
a is 1 or more and 27 or less;
m and n are each independently 1 or more and 32 or less; and
m + n is 2 or more and 32 or less. 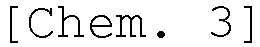 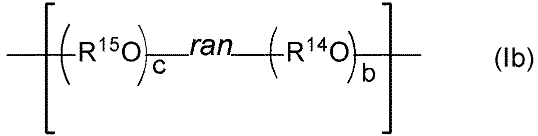
In Formula (Ib), R¹⁴ is a linear or branched alkylene group having 3 or more and 10 or less carbon atoms;
R¹⁵ is a group having a structure different from that of R¹⁴;
R¹⁵ is a linear or branched alkylene group having 3 or more and 10 or less carbon atoms;
b is 1 or more and 25 or less; and
c is 1 or more and 31 or less.

According to an embodiment, a cured product is provided. The cured product is a cured product of the optical material composition according to the embodiment.

According to an embodiment, an optical article is provided. The optical article includes the cured product according to the embodiment.

According to an embodiment, a lens is provided. The lens includes the optical article according to the embodiment.

According to an embodiment, glasses are provided. The glasses include the lens according to the embodiment.

### Effects of the Invention

The present invention provides an optical material composition capable of realizing excellent performance of a functional dye, a cured product, an optical article, a lens, and glasses.

### PREFERRED MODE FOR CARRYING OUT THE INVENTION

### [Optical material composition]

An optical material composition according to the embodiment includes an optical material compound represented by Formula (I) and another compound for matrix formation. The compound for matrix formation includes at least one compound selected from the group consisting of a compound having a radical-polymerizable group, a compound having a polyaddition-reactive group, and a compound having a reactive group reactive with the polyaddition-reactive group.

In a cured product of an optical material composition according to the embodiment, an optical material compound represented by Formula (I) forms a microphase-separated structure, which can enhance performance of a functional dye. The reasons for this will be described below.

First, a functional dye includes a compound that has a selective absorption ability for visible light, as well as a compound that develops a color, decolors, or changes in color by energy such as light, heat, an electric field, or pressure. Such a functional dye can exert a specific function by undergoing a structural change under a specific condition. Typically, a matrix of a plastic cured product has a rigid structure. Therefore, the functional dye in the cured product is less likely to undergo a structural change than in solution, which may limit its function. In an optical material compound represented by Formula (I), an R¹ moiety has more carbon atoms than repeating structure moieties with subscripts p and q located at both ends of the R¹ moiety, that is, an R²O moiety and an R³O moiety. Hence, the R¹ moiety is more hydrophobic than the R²O moiety and the R³O moiety. It is believed that R¹ moieties that are relatively highly hydrophobic aggregate with each other to form a hydrophobic domain in a relatively highly hydrophilic matrix. This hydrophobic domain is a more flexible region compared to the hydrophilic matrix surrounding it. A functional dye, which is relatively hydrophobic, is more easily located in the hydrophobic domain, and therefore, is less likely to be prevented from structurally changing and can exert an excellent functionality compared to the case where it is located in the rigid hydrophilic matrix. Here, excessive aggregation of the R¹ moiety may render the cured product cloudy, resulting in loss of an optical property. For the optical material compound represented by Formula (I), the R¹ moiety includes R¹¹O, R¹²O, and R¹³O moieties or R¹⁴O and R¹⁵O moieties, i.e., at least two types of repeating structures, which suppresses excessive aggregation of the R¹ moiety. Furthermore, the R²O moiety and the R³O moiety, which are relatively highly hydrophilic, located at both ends of the R¹ moiety increase compatibility with the relatively highly hydrophilic matrix and thus prevent excessive aggregation of the R¹ moiety. On the contrary, it is believed that, in a relatively highly hydrophobic matrix, the R¹ moiety increases compatibility with the hydrophobic matrix and the R²O moiety and the R³O moiety can form a hydrophilic domain.

By way of example, a case of using polyurethane serving as a relatively highly hydrophilic matrix and an optical material compound represented by Formula (I) in which X¹ and X² are a hydrogen atom, i.e., an optical material compound represented by Formula (I) which is a diol will be more specifically described.

First, the polyurethane is a resin including a plurality of urethane bonds (-OC(=O)N(H)-) formed by polyaddition of an isocyanate group (-N=C=O), which is a polyaddition-reactive group, and a hydroxy group (-OH), which is a reactive group reactive with the polyaddition-reactive group. A diisocyanate having isocyanate groups at both ends undergoes a polyaddition reaction with a diol having hydroxy groups at both ends to form a linear polymer chain including a plurality of urethane bonds. It is believed that, in the polyurethane, a hydrogen bond occurs between the polymer chains at amine sites (-N(H)-) of the plurality of urethane bonds in the polymer chain, resulting in a strong intermolecular interaction to form a rigid matrix. When the optical material compound represented by Formula (I) is included as a kind of diol, a linear polymer chain including a moiety that consists of the R¹ moiety, the R²O moiety, and the R³O moiety and from which a hydrogen bond does not occur is formed. The R¹ moiety is relatively highly hydrophobic and therefore easily aggregates with each other in the polyurethane. As a result, within a structure in which a plurality of polymer chains are bound to each other via hydrogen bonds, a hydrophobic domain is formed in which moieties which each consist of the R¹ moiety, the R²O moiety, and the R³O moiety, and which do not form hydrogen bonds, aggregate with each other. This hydrophobic domain has no internal hydrogen bonds and thus is more flexible than a urethane matrix in which polymer chains are bound to each other via a hydrogen bond. As mentioned above, the functional dye, which is relatively hydrophobic, is more easily located within this hydrophobic domain, and therefore, is less likely to be prevented from structurally changing and can exert excellent functionality.

### (Optical material compound represented by Formula (I))

An optical material compound represented by Formula (I) can be used, for example, as a compound for forming an optical article such as a lens, a filter, a film, or a window material. This optical material compound is, for example, a colorless, transparent or translucent liquid at room temperature. The optical material compound may be a diol, a dithiol, a diacrylate, or a dimethacrylate. A structure of the optical material compound can be identified, for example, by nuclear magnetic resonance spectroscopy.

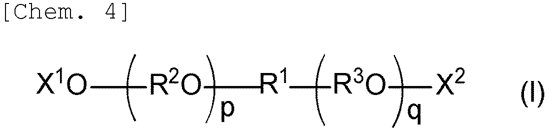

In Formula (I), X¹ and X² are each independently a hydrogen atom, a mercaptoethyl group, a 3-mercaptopropanoyl group, an allyl group, an acryloyl group, or a methacryloyl group.

X¹ and X² are preferably a group that can react with or is highly compatible with a compound that is a main component of a matrix. Therefore, X¹ and X² can be selected based on a type of the matrix. For example, when the optical material compound is used for a (thio)urethane resin, X¹ and X² are a hydrogen atom, a mercaptoethyl group, or a 3-mercaptopropanoyl group. When the optical material compound is used for a (meth)acrylic resin, X¹ and X² are preferably an allyl group, an acryloyl group, or a methacryloyl group.

R² and R³ are a methylene group or an ethylene group. In other words, repeating units R²O and R³O are (poly)methylene oxide or (poly)ethylene oxide. Each of an R²O chain and an R³O chain is more hydrophilic than an R¹ group.

In Formula (I), p is a number of repetitions of the repeating unit R²O.
q is a number of repetitions of the repeating unit R³O.
p and q are each independently 1 or more and 43 or less.
p and q may be 2 or more, 3 or more, 5 or more, or 7 or more.
p and q may be 10 or less, 15 or less, or 20 or less.

p + q is 2 or more and 44 or less.
p may be a number identical to or different from q. Larger values of p and q tend to increase hydrophilicity of the optical material compound and compatibility of the optical material compound within a (thio)urethane matrix.
p + q may be 4 or more, 6 or more, 7 or more, or 10 or more.
p + q may be 15 or less, 16 or less, 20 or less, or 28 or less.

R¹ is a divalent group represented by Formula (Ia) or (Ib) below. An optical material compound represented by Formula (I) having Formula (Ia) below may be a compound in which an R²O group and an R³O group are added in a block manner to a block adduct of an R¹²O group and an R¹³O group. An optical material compound represented by Formula (I) having Formula (Ib) below may be a compound in which an R²O group and an R³O group are added in a random manner to a block adduct of an R¹⁴O group and an R¹⁵O group.

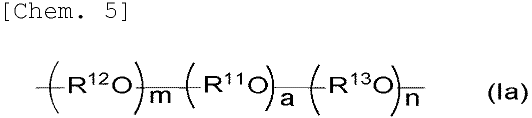

In Formula (Ia), R¹¹ is a linear or branched alkylene group having 2 or more and 10 or less carbon atoms. R¹¹ is preferably a linear or branched alkylene group having 3 or more and 10 or less carbon atoms and more preferably a normal-butylene group or an isobutylene group (-CH₂CH(CH₂CH₃)-). R¹¹ is preferably a linear alkylene group.

R¹² and R¹³ are a linear or branched alkylene group having 3 or more and 10 or less carbon atoms. In other words, repeating units R¹¹O, R¹²O, and R¹³O are each (poly)alkylene oxide. R¹² and R¹³ are the same groups as each other.

R¹² and R¹³ are a group having a structure different from that of R¹¹. R¹² and R¹³ having a structure different from that of R¹¹ prevent the optical material compound from aggregating and thus cloudiness tends to be less likely to occur. R¹² and R¹³ are preferably more hydrophobic than R² and R³. It is preferred that an R¹²O chain and an R¹³O chain be both present and more hydrophobic than an R²O chain and an R³O chain, respectively. In such a form, both an effect of forming a hydrophobic domain in an optical material compound and an effect of suppressing aggregation are easily achieved. R¹² and R¹³ are preferably a branched alkylene group, more preferably a branched alkylene group having 3 or more and 5 or less carbon atoms, and further preferably an isopropylene group (-CH₂CH(CH₃)-) .
a is 1 or more and 27 or less. A larger number of a tends to render an optical material compound more hydrophobic.
a may be 2 or more or 3 or more.
a may be 5 or less, 9 or less, or 15 or less.
m and n are each independently 1 or more and 32 or less.
Larger numbers of m and n tend to render an optical material compound more hydrophobic.
m and n may be each independently 2 or more, 3 or more, 5 or more, or 7 or more.
m and n may be 10 or less, 13 or less, or 15 or less.
m may be a number identical to or different from n.
m + n is 2 or more and 32 or less.
m + n may be 4 or more, 6 or more, 7 or more, or 10 or more.
m + n may be 13 or less, 15 or less, or 20 or less.

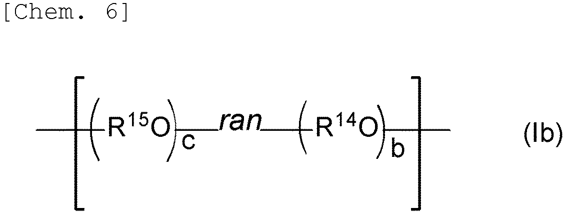

In Formula (Ib), R¹⁴ is a linear or branched alkylene group having 3 or more and 10 or less carbon atoms. R¹⁴ may be the same group as R¹¹ described above. R¹⁵ is a group having a structure different from that of R¹⁴. R¹⁵ is a linear or branched alkylene group having 3 or more and 10 or less carbon atoms. R¹⁵ may be the same group as R¹² or R¹³ described above.
b is 1 or more and 25 or less. A larger number of b tends to render an optical material compound more hydrophobic.
b may be 2 or more, 3 or more, 5 or more, or 7 or more.
b may be 9 or less, 10 or less, 13 or less, or 15 or less.
c is 1 or more and 31 or less. A larger number of c tends to render an optical material compound more hydrophobic.
c may be 2 or more, 3 or more, 5 or more, or 7 or more.
c may be 10 or less, 13 or less, 15 or less, or 20 or less.

Specific examples of an optical material compound are as follows.

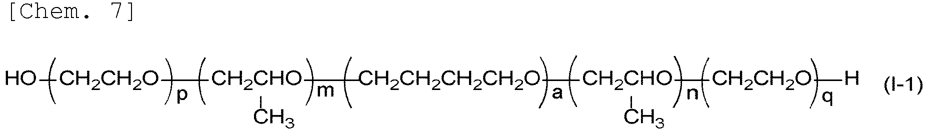

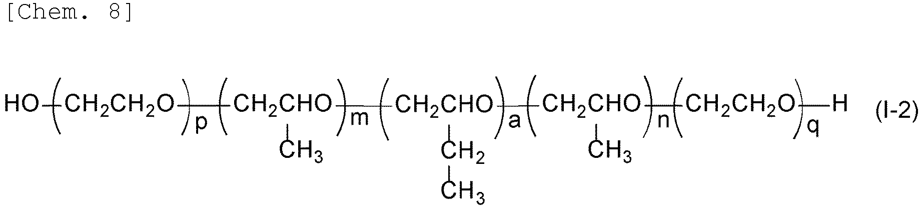

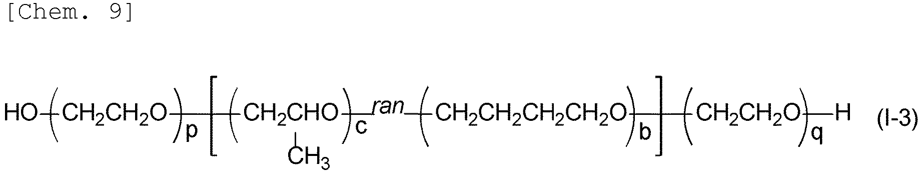

A number average molecular weight of an optical material compound is, for example, 500 or more and 2000 or less. An optical material compound having a higher number average molecular weight tends to enhance photochromic performance of a cured product. An optical material compound having a lower number average molecular weight tends to enhance an optical property of a cured product (suppress cloudiness). An optical material compound preferably has a number average molecular weight of 800 or more and 1600 or less. A number average molecular weight of an optical material compound having a hydroxy group can be calculated from a hydroxy group value according to the Japanese Industrial Standard (JIS) K 1557-1:2007. A number average molecular weight of an optical material compound having no hydroxy groups can be calculated by nuclear magnetic resonance (NMR) spectroscopy.

A proportion of a sum of a number average molecular weight of an R²O chain and a number average molecular weight of an R³O chain to a number average molecular weight of an optical material compound is, for example, 4% or more and 97% or less. When the proportion is higher, the optical material compound tends to be more hydrophilic. The proportion is preferably 10% or more and 70% or less, more preferably 20% or more and 60% or less, and further preferably 30% or more and 50% or less. A number average molecular weight of an R²O chain or an R³O chain can be calculated by combining the NMR method with the number average molecular weight of an optical material compound as described above. The R²O chain or the R³O chain means a domain composed of an R²O group or an R³O group repeated for a number of repetitions, respectively.

A number average molecular weight of an R¹ group is, for example, 300 or more and 1500 or less. An R¹ group having a higher number average molecular weight tends to be more hydrophobic. A number average molecular weight of an R¹ group is preferably 450 or more and 1300 or less and more preferably 600 or more and 1000 or less. A number average molecular weight of an R¹ group can be calculated by combining the NMR method with the number average molecular weight of an optical material compound as described above.

A proportion of a number average molecular weight of an R¹ group to a number average molecular weight of an optical material compound is, for example, 3% or more and 96% or less. When the proportion is higher, an optical material compound tends to be more hydrophobic. The proportion is preferably 30% or more and 90% or less, more preferably 35% or more and 70% or less, and further preferably 40% or more and 65% or less.

A proportion of a number average molecular weight of an R¹¹O chain or an R¹⁴O chain to a number average molecular weight of an R¹ group is, for example, 3% or more and 100% or less. When the proportion is higher, an optical material compound tends to be more hydrophilic. The proportion is preferably 5% or more and 60% or less and more preferably 10% or more and 30% or less. A number average molecular weight of an R¹¹O chain or an R¹⁴O chain can be calculated by combining the NMR method with the number average molecular weight of an optical material compound as described above. The R¹¹O chain or the R¹⁴O chain means a domain composed of an R¹¹O group or an R¹⁴O group repeated for a number of repetitions, respectively.

A proportion of an optical material compound included in an optical material composition is 5% by mass or more and 60% by mass or less. When the proportion is higher, photochromic performance of a cured product tends to be enhanced. When the proportion is excessively higher, an optical property of a cured product tends to deteriorate. The proportion is preferably 10% by mass or more and 50% by mass or less and more preferably 15% by mass or more and 40% by mass or less. The proportion can be calculated, for example, by the NMR method.

An optical material compound can be produced, for example, as described below. First, a first compound is prepared as a starting material. A compound having an R¹¹O structure in Formula (Ia) such as HO-R¹¹O-OH is used as the first compound.

The first compound is reacted with a second compound to obtain a third compound. For example, such a reaction is performed in an autoclave with nitrogen replacement at a reaction temperature of 100°C or more and 150°C or less and a reaction pressure of 0.1 MPa or more and 1 Mpa or less for a reaction time of 1 hour or more and 10 hours or less. The reaction is preferably performed in the presence of a catalyst. For example, an alkali metal hydroxide such as potassium hydroxide is used as the catalyst. An amount of catalyst is, for example, 0.01 g or more and 1 g or less per gram of the first compound.

A cyclic ether compound having an R¹²O structure represented by Formula (A) below is used as the second compound. R¹² is the same as described for Formula (Ia). An amount of the second compound per gram of the first compound is, for example, 0.1 g or more and 10 g or less. Values of a and m + n in Formula (I) can be adjusted by adjusting this amount.

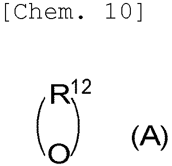

The third compound may be represented by, for example, HO-(R¹²O)m-(R¹¹O)a-(R¹²O)n-OH. R¹¹, R¹², a, m, and n are the same as described for Formula (Ia).

Next, the third compound is reacted with a fourth compound to obtain a diol-type optical material compound represented by Formula (I). For example, such a reaction is performed in an autoclave with nitrogen replacement at a reaction temperature of 100°C or more and 150°C or less and a reaction pressure of 0.1 MPa or more and 1 Mpa or less for a reaction time of 1 hour or more and 10 hours or less.

For example, ethylene oxide is used as the fourth compound. An amount of the fourth compound per gram of the first compound is, for example, 0.1 g or more and 10 g or less. A value of p + q in Formula (I) can be adjusted by adjusting this amount.

A functional group such as an acryloyl group can be introduced to an end of a diol-type optical material compound obtained as described above by a known method.

### (Compound for matrix formation)

A compound for matrix formation includes at least one compound selected from the group consisting of a compound having a radical-polymerizable group, a compound having a polyaddition-reactive group, and a compound having a reactive group reactive with the polyaddition-reactive group.

The radical-polymerizable group may be at least one functional group selected from the group consisting of an acryloyl group, a (meth)acryloyl group, an allyl group, and a vinyl group. The polyaddition-reactive group may be at least one functional group selected from the group consisting of an isocyanate group, an isothiocyanate group, and an epoxy group. The reactive group reactive with the polyaddition-reactive group may be at least one functional group selected from the group consisting of a hydroxy group, an amino group, a mercapto group, and a carboxy group.

A proportion of a compound for matrix formation included in an optical material composition is, for example, 40% by mass or more and 95% by mass or less. When the proportion is lower, photochromic performance of a cured product tends to be enhanced. When the proportion is excessively lower, an optical property of a cured product tends to deteriorate. The proportion is preferably 50% by mass or more and 90% by mass or less and more preferably 60% by mass or more and 85% by mass or less. The proportion can be calculated, for example, by the NMR method.

When an optical material composition includes a compound having a radical-polymerizable group, an optical material compound preferably has at least one acryloyl or methacryloyl group. Such an optical material composition can be used as a photocurable composition that can be cured by photopolymerization.

When an optical material composition includes at least one of a compound having a polyaddition-reactive group and a compound having a reactive group reactive with the polyaddition-reactive group, an optical material compound preferably has at least one hydroxyl or thiol group. An optical material composition includes both a compound having a polyaddition-reactive group and a compound having a reactive group reactive with the polyaddition-reactive group can be used as a one-component curable composition. An optical material composition that does not include a compound having a polyaddition-reactive group and includes only a compound having a reactive group reactive with the polyaddition-reactive group and an optical material compound can be used as a two-component curable composition.

A polyiso(thio)cyanate compound, an active hydrogen-containing compound, and a (meth)acrylate compound will be described as examples of the compound having a polyaddition reactivity group, the compound having a reactive group reactive with the polyaddition reactivity group, and the compound having a radical-polymerizable group, respectively.

### (Polyiso(thio)cyanate compound)

A "polyiso(thio)cyanate compound" is a compound having two or more isocyanate groups, a compound having two or more isothiocyanate groups, or a compound having one or more isocyanate groups and one or more isothiocyanate groups.

The polyisocyanate compound includes an aliphatic isocyanate compound, an alicyclic isocyanate compound, an aromatic isocyanate compound, a sulfur-containing heterocyclic isocyanate compound, a sulfur-containing aliphatic isocyanate compound, an aliphatic sulfide isocyanate compound, an aromatic sulfide isocyanate compound, an aliphatic sulfone isocyanate compound, an aromatic sulfone isocyanate compound, a sulfonic ester isocyanate compound, an aromatic sulfonic amide isocyanate compound, etc.

The polyisocyanate compound also includes a blocked isocyanate compound in which an isocyanate group in the above isocyanate compound is blocked by at least one blocking agent selected from the group consisting of an alcohol, a lactam, a phenol, an oxime, a pyrazole, a thiol, an active methylene compound, a malonic acid diester compound, and an acetoacetic acid ester compound, etc.

An amount of the polyiso(thio)cyanate compound in a curable composition is preferably 10 parts by mass or more and 200 parts by mass or less and more preferably 50 parts by mass or more and 150 parts by mass or less relative to 100 parts by mass of an active hydrogen-containing compound.

Among the polyisocyanate compounds, compounds shown by Formulae (I') to (VIII) below are suitable for forming an optical article with excellent transparency and mechanical strength, in particular, for producing an optical article including a photochromic compound. A preferred aliphatic isocyanate compound includes a compound represented by Formula below:
[Chem. 11]

**OCN-R¹⁰⁰-NCO** (I')

in which R¹⁰⁰ is an alkylene group having 1 to 10 carbon atoms and may be a group in which a part of methylene groups in a chain of the alkylene group is substituted by a sulfur atom. Among these, a linear group such as a pentamethylene group, a hexamethylene group, a heptamethylene, or an octamethylene group, or a branched group in which a part of hydrogen atoms in a pentamethylene group, a hexamethylene group, a heptamethylene group, or an octamethylene group is substituted by a methyl group is preferred. The group in which a part of methylene groups in a chain of the alkylene group is preferably a -CH₂CH₂SCH₂CH₂SCH₂CH₂- group.

Specific examples of the compound shown by Formula (I') include pentamethylene diisocyanate, hexamethylene diisocyanate, heptamethylene diisocyanate, octamethylene diisocyanate, 2,4,4,-trimethylhexanemethylene diisocyanate, 1,2-bis(2-isocyanatoethylthio)ethane, etc. These compounds may be used alone or two or more thereof may be used in combination.

Preferred examples of an alicyclic isocyanate compound and an aromatic isocyanate compound include a compound shown by Formulae (II) and (III) below: 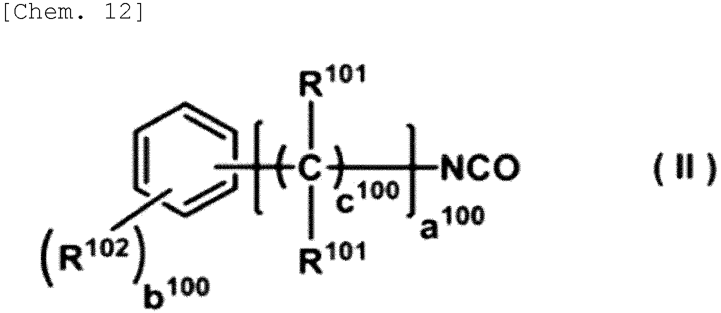 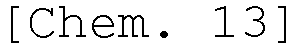 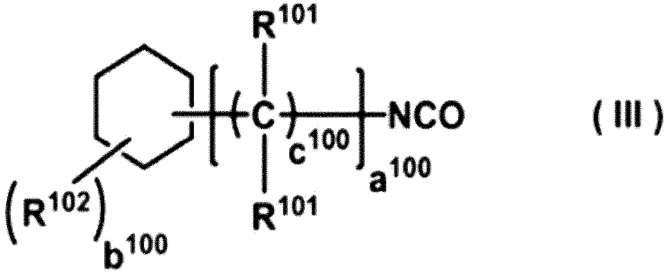 in which R¹⁰¹ is an alkyl group having 1 to 4 carbon atoms or a hydrogen atom and may be the same as or different from each other;
R¹⁰² is an alkyl group having 1 to 4 carbon atoms, and if a plurality of groups is present, they may be the same as or different from each other; and
a¹⁰⁰ is an integer of 2 or 3; b¹⁰⁰ is an integer of 0 to 4; and
c¹⁰⁰ is an integer of 0 to 4. The alkyl group having 1 to 4 carbon atoms for R¹⁰¹ may be linear or branched. Among these, R¹⁰¹ is particularly preferably a hydrogen atom, a methyl group, or an ethyl group. The alkyl group having 1 to 4 carbon atoms for R¹⁰² may be linear or branched. Among these, R¹⁰² is particularly preferably a methyl group or an ethyl group.

Specific examples of the compound shown by Formula (II) or (III) include isophorone diisocyanate, (o-, m-, p-)xylenediisocyanate, 2,4-tolylenediisocyanate, 2,6-tolylenediisocyanate, 1,3-bis(isocyanatomethyl)cyclohexane, 1,4-bis(isocyanatomethyl)cyclohexane, etc. These compounds may be used alone or two or more thereof may be used in combination.

The preferred examples of an alicyclic isocyanate compound and an aromatic isocyanate compound also include compounds shown by Formulae (IV) and (V) below: 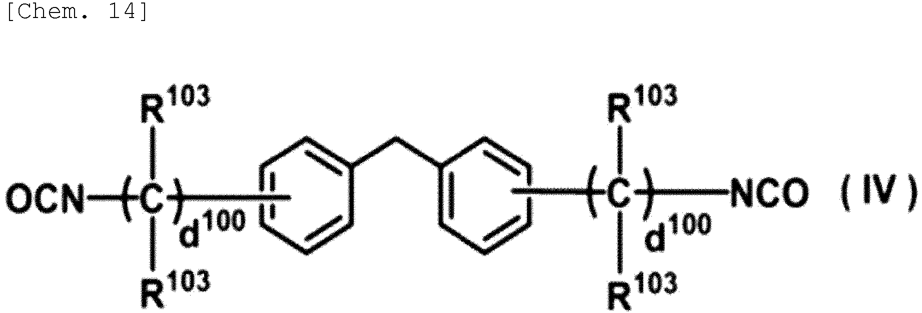 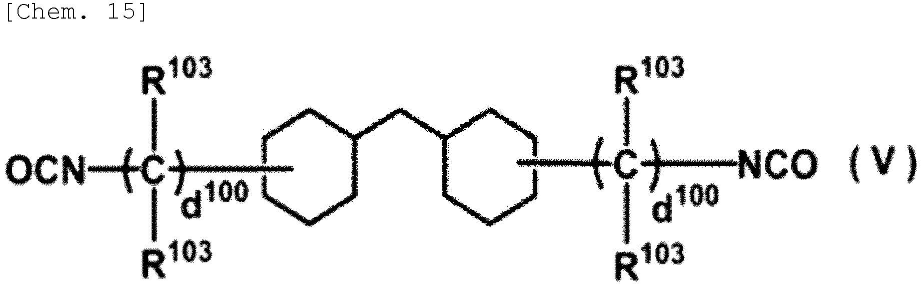 in which R¹⁰³ is an alkyl group having 1 to 4 carbon atoms or a hydrogen atom and may be the same as or different from each other; and d¹⁰⁰ is an integer of 0 to 4. The alkyl group having 1 to 4 carbon atoms for R¹⁰³ may be linear or branched. Among these, R¹⁰³ is particularly preferably a hydrogen atom, a methyl group, or an ethyl group. Specific examples of the compounds shown by Formula (IV) or (V) above include 4,4'-diphenylmethanediisocyanate, dicyclohexylmethane-4,4'-diisocyanate, etc. These compounds may be used alone or two or more thereof may be used in combination.

The preferred example of an aliphatic isocyanate compound also includes a compound represented by Formula (VI) below: 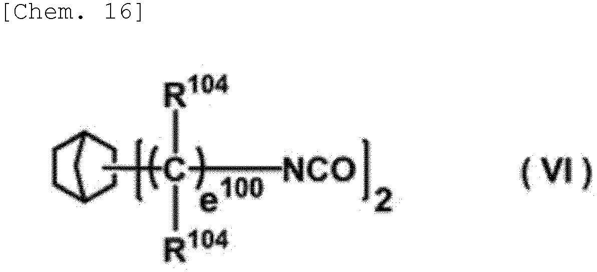 in which R¹⁰⁴ is an alkyl group having 1 to 4 carbon atoms or a hydrogen atom and may be the same as or different from each other; and e¹⁰⁰ is an integer of 0 to 4. The alkyl group having 1 to 4 carbon atoms for R¹⁰⁴ may be linear or branched. Among these, R¹⁰⁴ is particularly preferably a hydrogen atom, a methyl group, or an ethyl group.

Specific examples of the compound shown by Formula (VI) include norbornane diisocyanate, 2,5-bis(isocyanatomethyl)-bicyclo[2,2,1]-heptane, 2,6-bis(isocyanatomethyl)-bicyclo[2,2,1]-heptane, etc. These compounds may be used alone or two or more thereof may be used in combination.

### (Sulfur-containing heterocyclic isocyanate compound)

A preferred example of a sulfur-containing heterocyclic isocyanate compound includes a compound represented by Formula (VII) or (VIII) below: 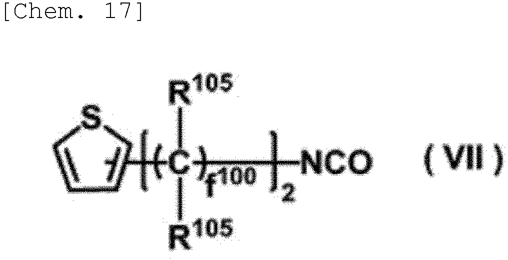 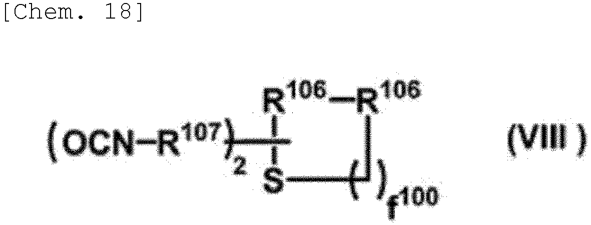 in which R¹⁰⁵ is an alkyl group having 1 to 4 carbon atoms or a hydrogen atom and may be the same as or different from each other;
R¹⁰⁶ is a methylene group or a sulfur atom; R¹⁰⁷ is an alkylene group having 1 to 6 carbon atoms or a group in which a part of methylene groups in a chain of the alkylene group having 1 to 6 carbon atoms is substituted by a sulfur atom; and f¹⁰⁰ is an integer of 0 to 2.

Specific examples of the compound shown by Formula (VII) or Formula (VIII) include 2,5-bis(isocyanatomethyl)thiophene, 2,5-bis(isocyanatomethyl)-1,4- dithiane, 3,4-bis(isocyanatomethyl)tetrahydrothiophene, 4,5-bis(isocyanatomethyl)-1,3-dithiolane, etc. These compounds may be used alone or two or more thereof may be used in combination.

Furthermore, a halogen-substituted, alkyl-substituted, alkoxy-substituted, or nitro-substituted form of the polyisocyanate, a prepolymer-type modified form of the polyisocyanate with a polyhydric alcohol, a carbodiimide-modified, urea-modified, or biuret-modified form of the polyisocyanate, a dimerization or trimerization reaction product of the polyisocyanate, etc. can also be used.

As the polyisothiocyanate compound, a compound in which an isocyanate group is replaced by an isothiocyanate group in the polyisocyanate compound shown by Formulae (I') to (VIII) can be used. More specific examples thereof include an aliphatic isothiocyanate compound, an alicyclic isothiocyanate compound, an aromatic isothiocyanate compound, a sulfur-containing heterocyclic isothiocyanate compound, a heterocycle-containing isothiocyanate compound, a sulfur-containing aliphatic isothiocyanate compound, a sulfur-containing aromatic isothiocyanate compound, etc.

Suitable specific examples of the isothiocyanate compound include an aliphatic isothiocyanate compound such as hexamethylene diisothiocyanate, 1,2-diisothiocyanate ethane, 1,3-diisothiocyanate propane, 1,4-diisothiocyanate butane, 1,6-diisothiocyanate hexane, 2,4,4,-trimethylhexanemethylene diisothiocyanate, thiobis(3-isothiocyanate propane), thiobis(2-isothiocyanate ethane), dithiobis(2-isothiocyanate ethane), etc.

Examples of the alicyclic isothiocyanate compound and the aromatic isothiocyanate compound include p-phenylenediisopropylidene diisothiocyanate, 1,2-diisothiocyanate benzene, 1,3-diisothiocyanate benzene, 1,4-diisothiocyanate benzene, 2,4-diisothiocyanate toluene, isophorone diisothiocyanate, (o-, m-, p-) xylene diisothiocyanate, 2,4-tolylene diisothiocyanate, 2,6-tolylene diisothiocyanate, cyclohexane diisothiocyanate, as well as 1,1'-methylene bis(4-isothiocyanate benzene), 1,1'-methylene bis(4-isothiocyanate 2-methylbenzene), 1,1'-methylene bis(4-isothiocyanate 3-methylbenzene), etc.

Preferred examples of the alicyclic isothiocyanate compound include 2,4-bis(isothiocyanatomethyl)norbornane, 2,5-bis(isothiocyanatomethyl)norbornane, 2,6-bis(isothiocyanatomethyl) norbornane, 3,5-bis(isothiocyanatomethyl)norbornane, norbornane diisothianate, etc.

Preferred examples of the sulfur-containing heterocyclic isocyanate compound include thiophene-2,5-diisothiocyanate, 1,4-dithiane-2,5-dithiocyanate, 2,5-bis(isothiocyanatomethyl)-1,4-dithiane, 4,5-bis(isothiocyanatomethyl)-1,3-dithiolane, etc.

Examples of a compound having both an isocyanate group and an isothiocyanate group include compounds as described below. For example, a group in which at least one isocyanate group is replaced by an isothiocyanate group in the above-specifically exemplified polyisocyanate compound may be used. Furthermore, the polyisothiocyanate compound specifically exemplified above in which at least one isothiocyanate group is replaced by an isocyanate group may also be used.

A compound in which an iso(thio)cyanate group is blocked with a blocking agent (hereinafter also referred to as a blocked iso(thio)cyanate compound) can be obtained by reacting an iso(thio)cyanate group in the above-described polyiso(thio)cyanate compound with at least one blocking agent selected from the group consisting of an alcohol, a lactam, a phenol, an oxime, a pyrazole, a thiol, an active methylene compound, a malonic acid diester compound, and an acetoacetic acid ester compound. Conditions under which the iso(thio)cyanate group reacts with the blocking agent depend on a type of the blocking agent, and may be appropriately determined according to the blocking agent selected. Note that, protection of the iso(thio)cyanate group with the blocking agent can be confirmed by Fourier transform infrared spectroscopy (FT-IR).

Use of the blocked iso(thio)cyanate compound can further extend a usable life of a urethane curable composition.

Preferred examples of the isocyanate compound include pentamethylene diisocyanate, hexamethylene diisocyanate, heptamethylene diisocyanate, octamethylene diisocyanate, 1,3-bis(isocyanatomethyl)cyclohexane, 1,4-bis(isocyanatomethyl)cyclohexane, isophorone diisocyanate, norbornane diisocyanate, 2,5-bis(isocyanatomethyl)-bicyclo[2,2,1]-heptane, 2,6-bis(isocyanatomethyl)-bicyclo[2,2,1]-heptane, 1,2-bis(2-isocyanatoethylthio)ethane, (o-, m-, p-) xylenediisocyanate, 2,4-tolylenediisocyanate, 2,6-tolylenediisocyanate, or 4,4'-diphenylmethane diisocyanate, which may be used alone or in a mixture thereof.

### (Active hydrogen-containing compound)

An active hydrogen-containing compound includes an aliphatic poly(thi)ol compound, an aromatic poly(thi)ol compound, etc.

An amount of the active hydrogen-containing compound in an optical material composition is preferably 20% by mass or more and 60% by mass or less.

When an optical material composition includes a polyiso(thio)cyanate compound, an amount of the active hydrogen-containing compound is preferably 10 parts by mass or more and 200 parts by mass or less and more preferably 80 parts by mass or more and 150 parts by mass or less relative to 100 parts by mass of the polyiso(thio)cyanate compound.

Among the poly(thi)ol compounds, compounds shown by Formulae (IX) to (XVII) below are suitable for forming an optical article with excellent transparency and heat resistance, in particular, for producing an optical article including a photochromic compound.

### (Aliphatic poly(thi)ol compound)

A preferred example of an aliphatic poly(thi)ol compound includes a compound shown by Formula (IX) below: 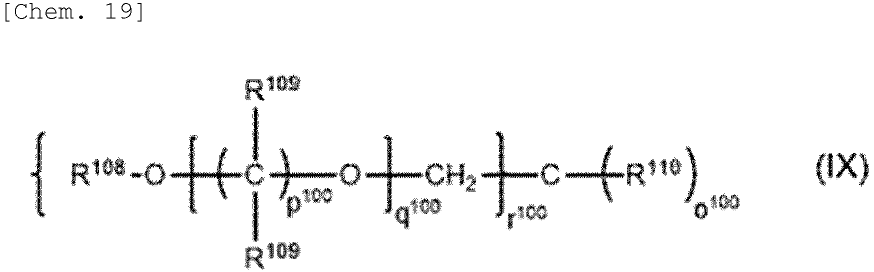 in which R¹⁰⁸ is a hydrogen atom or Formula (X) below;
R¹⁰⁹ is a hydrogen atom, a methyl group, or an ethyl group and may be the same as or different from each other;
R¹¹⁰ is a hydrogen atom or an alkyl group having 1 to 6 carbon atoms, and if a plurality of R¹¹⁰ is present, they may be the same as or different from each other;
o¹⁰⁰ is 0 to 2; p¹⁰⁰ is 1 to 6; q¹⁰⁰ is 0 to 10; r¹⁰⁰ is 2 to 4; and o¹⁰⁰ + r¹⁰⁰ is 4. 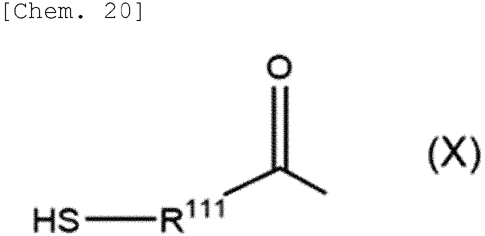
in which R¹¹¹ is an alkylene group having 1 to 6 carbon atoms. R¹¹¹ is an alkyl group having 1 to 6 carbon atoms and may be linear or branched. Among these, R¹¹¹ is particularly preferably a methyl group, an ethyl group, a trimethyl group, or a propyl group.

Specific examples of the compound shown by Formula (IX) include trimethylolpropane, pentaerythritol, trimethylolpropane tris(3-mercaptopropionate), pentaerythritol tetrakis(3-mercaptopropionate), etc.

Among preferred aliphatic poly(thi)ol compounds, a multifunctional poly(thi)ol compound having an ether bond includes a compound shown by Formula (XI) below: 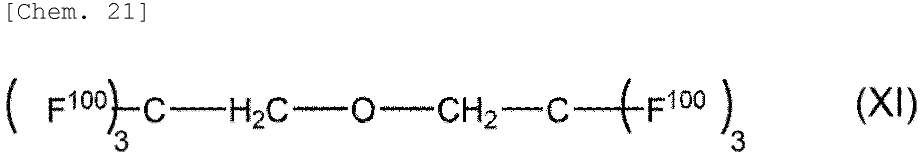 in which at least two of F¹⁰⁰ are a group shown by Formula (XII). Other groups for F¹⁰⁰ include an alkyl group having 1 to 6 carbon atoms and may be linear or branched. Among these, F¹⁰⁰ is particularly preferably a methyl group, an ethyl group, a trimethyl group, or a propyl group. Furthermore, if two or more of F¹⁰⁰ are a group shown by Formula (XII), they may be the same as or different from each other.

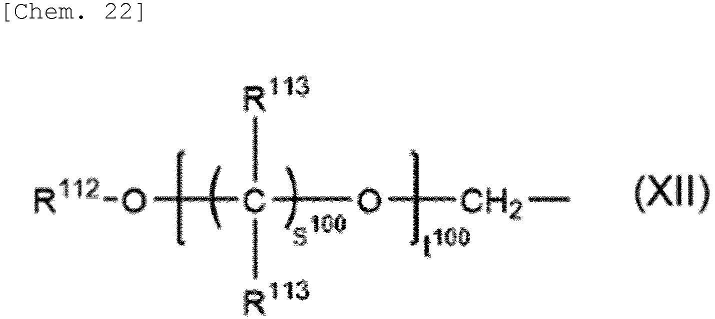

R¹¹² is a hydrogen atom or the same group as Formula (X) above, which may be the same as or different from each other; R¹¹³ is a hydrogen atom, a methyl group, or an ethyl group and may be the same as or different from each other;
S¹⁰⁰ is 1 to 6; and t¹⁰⁰ is 0 to 10.

Specific examples of the compound shown by Formula (XI) include ditrimethylolpropane, dipentaerythritol, ditrimethylolpropane tetrakis(3-mercaptopropionate), dipentaerythritol hexakis(3-mercaptopropionate), etc.

Among preferred aliphatic poly(thi)ol compounds, a compound shown by Formula (XIII) below is preferably used as a multifunctional polythiol compound: 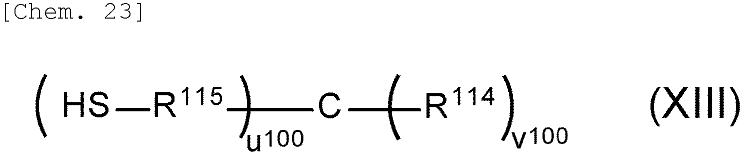 in which R¹¹⁴ is a hydrogen atom, an alkyl group having 1 to 6 carbon atoms, or a group in which a part of methylene groups in the alkyl group having 1 to 6 carbon atoms is substituted by a sulfur atom, and if a plurality of R¹¹⁴ is present, they may be the same as or different from each other; R¹¹⁵ is an alkylene group having 1 to 10 carbon atoms, a group in which a part of methylene groups in a chain of the alkylene group having 1 to 10 carbon atoms is substituted by a sulfur atom, or a group in which a part of hydrogen atoms in the alkylene group having 1 to 10 carbon atoms is substituted by a thiol group, and if a plurality of R¹¹⁵ is present, they may be the same as or different from each other;
u¹⁰⁰ is an integer of 2 to 4; v¹⁰⁰ is an integer of 0 to 2; and
u¹⁰⁰ + v¹⁰⁰ is 4. The alkyl group having 1 to 6 carbon atoms for R¹¹⁴ may be linear or branched. Among these, R¹¹⁴ is preferably a hydrogen atom, a methyl group, or an ethyl group.
Furthermore, specific examples of the group in which a part of methylene groups in a chain of the alkylene group having 1 to 6 carbon atoms is substituted by a sulfur atom include - CH₂SCH₃, etc. The alkylene group having 1 to 10 carbon atoms for R¹¹⁵ may be linear or branched. Among these, R¹¹⁵ is particularly preferably a methylene group, an ethylene group, a trimethylene group, or a propylene group. Furthermore, specific examples of the group in which a part of methylene groups in a chain of the alkylene group having 1 to 10 carbon atoms is substituted by a sulfur atom include -CH₂S-, - CH₂CH₂S-, -CH₂CH₂CH₂S-, etc. Additionally, specific examples of a group in which a part of hydrogen atoms in an alkyl group having 1 to 6 carbon atoms is substituted by a thiol group include -CH₂SCH(SCH₂SH)-, etc.

Specific examples of the compound shown by Formula (XIII) include 4-mercaptomethyl-1,8-dimercapto-3,6-dithiaoctane, 1,1,1,1-tetrakis(mercaptomethyl)methane, 1,1,3,3-tetrakis(mercaptomethylthio)propane, 1,1,2,2-tetrakis(mercaptomethylthio)ethane, 4,7-bismercaptomethyl-3,6,9-trithio-1,11-undecanedithiol, 5,7-dimercaptomethyl-1,11-dimercapto-3,6,9-trithiaundecane, 4,8-dimercaptomethyl-1,11-dimercapto-3,6,9-trithiaoundecane, etc.

Among preferred aromatic poly(thi)ol compounds, a phenyl group-containing polythiol compound may be a compound shown by Formula (XIV) below: 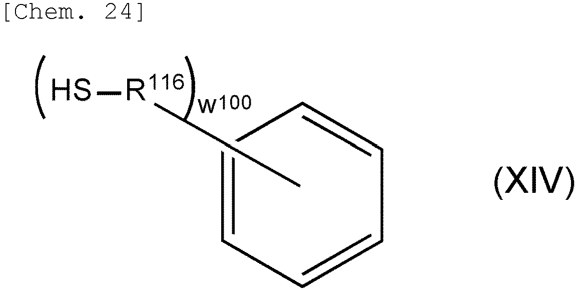 in which R¹¹⁶ is an alkylene group having 1 to 6 carbon atoms or a group in which a part of methylene groups in a chain of the alkylene group having 1 to 6 carbon atoms is substituted by a sulfur atom; and w¹⁰⁰ is 3. The alkylene group having 1 to 6 carbon atoms for R¹¹⁶ may be linear or branched. Among these, R¹¹⁶ is preferably a methylene group, an ethylene group, a trimethylene group, or a propylene group. Furthermore, specific examples of the group in which a part of methylene groups in a chain of the alkylene group having 1 to 6 carbon atoms is substituted by a sulfur atom include - CH₂CH₂CH₂SCH₂-, -CH₂CH₂SCH₂-, -CH₂SCH₂-, etc. Specific examples of the compound shown by Formula (XIV) include 1,3,5-tris(mercaptopropylthiomethyl)benzene.

Among preferred poly(thi)ol compounds other than those described above, a poly(thi)ol compound having a triazine ring may be a compound shown by Formula (XV) below: 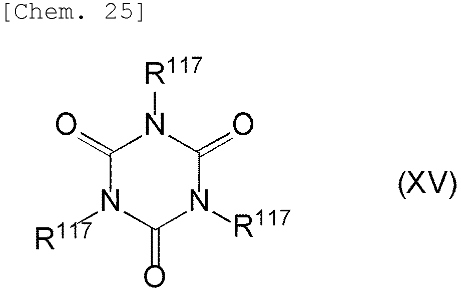 in which R¹¹⁷ is an alkyl group having 1 to 6 carbon atoms or a group shown by Formula (XVI) below. However, at least two of R¹¹⁷ are a group shown by Formula (XVI) and R¹¹⁷ may be the same as or different from each other.

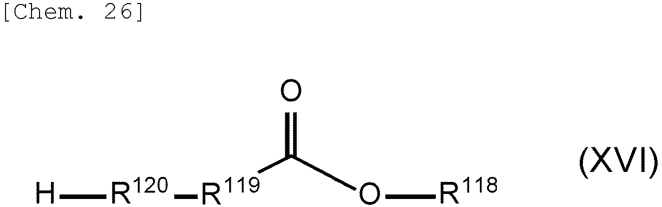

In the above formula, R¹¹⁸ and R¹¹⁹ is an alkylene group having 1 to 6 carbon atoms; and
R¹²⁰ is an oxygen atom or a sulfur atom. The alkylene group having 1 to 6 carbon atoms for R¹¹⁸ and R¹¹⁹ may be linear or branched. Among these, R¹¹⁸ and R¹¹⁹ are preferably a methylene group, an ethylene group, a trimethylene group, or a propylene group. Specific examples of a compound shown by Formula (XV) include 2-mercaptomethanol, tris-{ (3-mercaptopropionyloxy)-ethyl}-isocyanurate, etc.

Among preferred poly(thi)ol compounds other than those described above, a compound having a silsesquioxane structure can be used. The compound having a silsesquioxane structure takes various molecular configurations such as cage-like, ladder-like, or random, and is a compound shown by Formula (XVII) below: 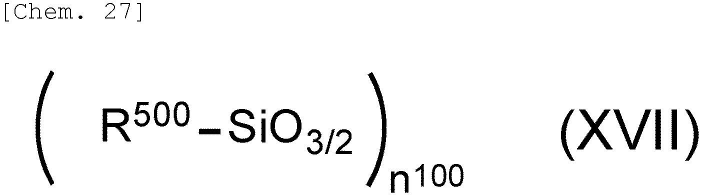 in which a plurality of R⁵⁰⁰ may be the same as or different from each other and is a hydrogen atom, an alkyl group, a cycloalkyl group, an alkoxy group, a phenyl group, and at least two or more hydroxy groups per molecule and/or an organic group including a thiol group; and n¹⁰⁰ is an integer of 3 to 100.

The poly(thi)ol compound can be used without particular limitation, and a plurality thereof can be used in combination taking into account functionality and a mechanical property of the resulting cured product. Among these, a poly(thi)ol compound having 3 to 6 active hydrogen-containing groups per molecule is preferably used in order to enable production of a photochromic optical article with an excellent property and give excellent moldability and good handleability to a curable composition.

Preferred examples of the poly(thi)ol compound include trimethylolpropane tris(3-mercaptopropionate), pentaerythritol tetrakis(3-mercaptopropionate), dipentaerythritol hexakis(3-mercaptopropionate), 4-mercaptomethyl-1,8-dimercapto-3,6-dithiaoctane, tris-{(3-mercaptopropionyloxy)-ethyl}-isocyanurate. Among these, at least one of trimethylolpropane tris(3-mercaptopropionate), pentaerythritol tetrakis(3-mercaptopropionate), or dipentaerythritol hexakis(3-mercaptopropionate) is more preferably used.

Among these, dipentaerythritol hexakis(3-mercaptopropionate) is most preferred since it can enhance photochromicity and a mechanical property of the resulting cured product. From the viewpoint of photochromicity, dipentaerythritol hexakis(3-mercaptopropionate) is preferably used alone as the poly(thi)ol compound. However, dipentaerythritol hexakis(3-mercaptopropionate) has a high viscosity and thus when a cured product is obtained by casting polymerization, another poly(thi)ol compound can be mixed therewith in order to adjust a viscosity. Preferred examples of the other poly(thi)ol compound include trimethylolpropane tris(3-mercaptopropionate), pentaerythritol tetrakis(3-mercaptopropionate), 1,6-hexanediol bis(3-mercaptopropionate), 1,2-bis[(2-mercaptoethyl)thio]-3-mercaptopropane, 2,2-bis(mercaptomethyl-1,4-butanedithiol, 2,5-bis(mercaptomethyl)-1,4-dithiane, 4-mercaptomethyl-1,8-dimercapto-3,6-dithiaoctane, 1,1,1,1-tetrakis(mercaptomethyl)methane, 1,1,3,3-tetrakis(mercaptomethylthio)propane, 1,1,2,2-tetrakis(mercaptomethylthio)ethane, 4,6-bis(mercaptomethylthio)-1,3-dithiane, or tris-{(3-mercaptopropionyloxy)-ethyl}-isocyanurate. Especially, trimethylolpropane tris (3-mercaptopropionate) is particularly preferably used in combination since it can enhance handleability while maintaining an excellent photochromic property.

### (Polyamine)

An active hydrogen-containing compound may include a polyamine. The polyamine can serve as a chain extender for a polymer or prepolymer having a urethane bond. The polyamine can be used to obtain a polymer or prepolymer having a (thio)urethane-urea bond. The polyamine preferably has a molar mass of 50 or more and 500 or less. A polyamine having a molar mass falling within the above-described range tends to result in a polymer having a desired number average molecular weight. The polyamine more preferably has a molar mass of 50 or more and 300 or less. The polyamine includes a diamine and a triamine and preferably includes a diamine.

Examples of the polyamine include isophoronediamine, ethylenediamine, 1,2-diaminopropane, 1,3-diaminopropane, 1,2-diaminobutane, 1,3-diaminobutane, 1,4-diaminobutane, 1,5-diaminopentane, 1,6-diaminohexane, piperazine, N,N-bis-(2-aminoethyl) piperazine, bis-(4-aminocyclohexyl)methane, bis-(4-amino-3-butylcyclohexyl)methane, 1,2-, 1,3-, and 1,4-diaminocyclohexane, norbornane diamine, hydrazine, adipic dihydrazine, phenylenediamine, 4,4'-diphenylmethanediamine, N,N'-diethylethylenediamine, N,N'-dimethylethylenediamine, N,N'-dipropylethylenediamine, N,N'-dibutylethylenediamine, N-methylethylenediamine, N-ethylethylenediamine, bis(hexamethylene)triamine, 1,2,5-pentanetriamine, etc.

The polyamine preferably includes at least one selected from the group consisting of isophoronediamine, ethylenediamine, bis-(4-aminocyclohexyl)methane, and 1,6-diaminohexane.

### (Monofunctional active hydrogen compound)

An active hydrogen-containing compound may include a monofunctional active hydrogen compound. The monofunctional active hydrogen compound has one active hydrogen group. The monofunctional active hydrogen compound reacts with an iso(thio)cyanate group to stop a further reaction. The active hydrogen group includes at least one selected from the group consisting of a hydroxy group, an amino group, a carboxy group, and a thiol group.

The monofunctional active hydrogen compound includes, for example, at least one selected from the group consisting of a monool compound including one hydroxy group, a monoamine compound including one amino group, a carboxylic acid including one carboxy group, and a monothiol compound including one thiol group. A single type of monofunctional active hydrogen compound may be used, or a mixture of a plurality of types of monofunctional active hydrogen compounds may be used.

The monofunctional active hydrogen compound is preferably a monoamine compound. The monoamine compound can be used to obtain a polymer or prepolymer having a (thio)urea bond.

The monofunctional active hydrogen compound preferably includes an amine having a 2,2,6,6-pentamethyl-4-piperidyl moiety, as represented by Formula (3) below. The amine having a 2,2,6,6-pentamethyl-4-piperidyl moiety can function as a hindered amine and thus enhance photostability of a cured product.

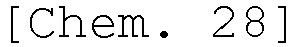

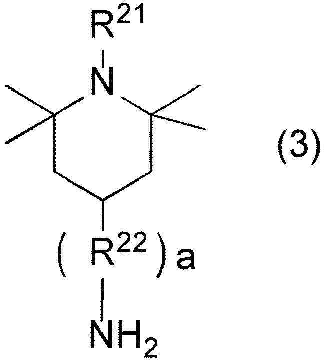

In Formula (3), R²¹ is a hydrogen atom or an alkyl group having 1 or more and 3 or less carbon atoms;
R²² is an alkylene group having 1 or more and 3 or less carbon atoms; and
a is 0 or 1. The monofunctional active hydrogen compound is preferably 1,2,2,6,6-pentamethyl-4-aminopiperidine in which R²¹ is a methyl group and a is 0.

### (Prepolymer)

An optical material composition may include a prepolymer. The prepolymer is a reaction product of the polyiso(thio)cyanate compound and the active hydrogen group-containing compound and includes a urethane prepolymer having one or more iso(thio)cyanate groups or active hydrogen groups. The prepolymer is also a reaction product of the urethane prepolymer and a polyamine and includes a urethane prepolymer having one or more iso(thio)cyanate groups or active hydrogen groups. The prepolymer may have two or more iso(thio)cyanate groups or active hydrogen groups.

### ((Meth)acrylate compound)

For example, a bifunctional (meth)acrylic polymerizable compound, a multifunctional (meth)acrylic polymerizable compound, a monofunctional (meth)acrylic polymerizable compound, etc. can be used as a (meth)acrylate compound, and a bifunctional (meth)acrylic polymerizable compound is preferably included. Specific examples of the bifunctional (meth)acrylic polymerizable compound include compounds shown by Formulae (5), (6), and (7) below.

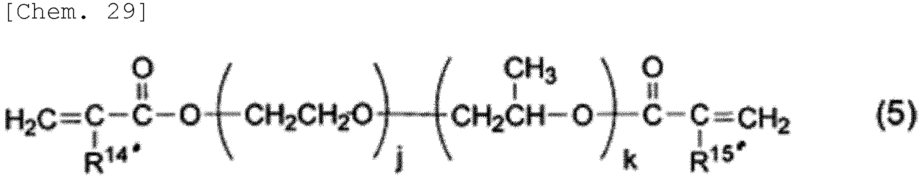

In the above formula, R¹⁴' and R¹⁵' are each a hydrogen atom or a methyl group; j and k are each independently an integer of 0 or more; and j + k is 2 or more and 50 or less on average. Note that, the polymerizable compound shown by Formula (5) above is typically obtained in a form of a mixture of molecules with different molecular weights. Therefore, j and k are described as an average value.

Specific examples of the compound shown by Formula (5) above include:
diethylene glycol dimethacrylate, triethylene glycol dimethacrylate, tetraethylene glycol dimethacrylate, pentaethylene glycol dimethacrylate, pentapropylene glycol dimethacrylate, diethylene glycol diacrylate, triethylene glycol diacrylate, tetraethylene glycol diacrylate, pentaethylene glycol diacrylate, tripropylene glycol diacrylate, tetrapropylene glycol diacrylate, pentapropylene glycol diacrylate, a dimethacrylate composed of a mixture of polypropylene glycol and polyethylene glycol (polyethylene has two repeating units and polypropylene has two repeating units), polyethylene glycol dimethacrylate (especially one having an average molecular weight of 330), polyethylene glycol dimethacrylate (especially one having an average molecular weight of 536), polyethylene glycol dimethacrylate (especially one having an average molecular weight of 736), tripropylene glycol dimethacrylate, tetrapropylene glycol dimethacrylate, polypropylene glycol dimethacrylate (especially one having an average molecular weight of 536), polyethylene glycol diacrylate (especially one having an average molecular weight of 258), polyethylene glycol diacrylate (especially one having an average molecular weight of 308), polyethylene glycol diacrylate (especially one having an average molecular weight of 508), polyethylene glycol diacrylate, (especially one having an average molecular weight of 708), or polyethylene glycol methacrylate acrylate (especially with an average molecular weight of 536).

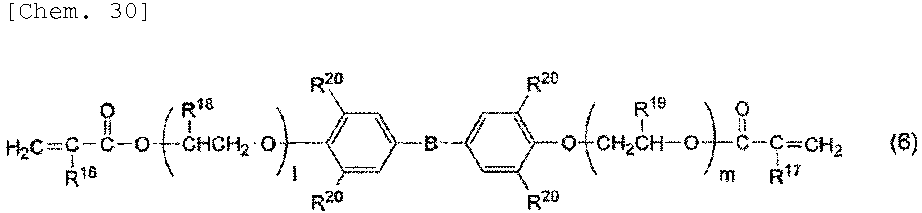

In the above formula, R¹⁶ and R¹⁷ are each a hydrogen atom or a methyl group;
R¹⁸ and R¹⁹ are each a hydrogen atom or a methyl group;
R²⁰ is a hydrogen atom or a halogen atom;
B is any of -O-, -S-, -(SO₂)-, -CO-, -CH₂-, -CH=CH-, -C(CH₃)₂-, or -C(CH₃)(C₆H₅)-;
l and m are each an integer of 1 or more; and l + m is 2 or more and 30 or less on average. Note that, the polymerizable compound shown by Formula (6) above is typically obtained in a form of a mixture of molecules with different molecular weights. Therefore, l and m are described as an average value.

Specific examples of the compound shown by Formula (6) above include bisphenol A di(meth)acrylate including: 2,2-bis[4-methacryloyloxy-ethoxy)phenyl]propane (l + m = 2), 2,2-bis[4-methacryloyloxy-diethoxy]phenyl]propane (l + m = 4), 2,2-bis[4-methacryloyloxy-polyethoxy)phenyl]propane (l + m = 7), 2,2-bis(3,5-dibromo-4-methacryloyloxyethoxyphenyl)propane (l + m = 2), 2,2-bis(4-methacryloyloxydipropoxyphenyl)propane (l + m = 4), 2,2-bis[4-acryloyloxy-diethoxy)phenyl]propane (l + m = 4), 2,2-bis[4-acryloyloxy-polyethoxy)phenyl]propane (l + m = 3), 2,2-bis[4-acryloyloxy-polyethoxy)phenyl]propane (l + m = 7), 2,2-bis[4-methacryloyloxy(polyethoxy)phenyl]propane (l + m = 10), 2,2-bis[4-methacryloyloxy(polyethoxy)phenyl]propane (l + m = 17), 2,2-bis[4-methacryloyloxy(polyethoxy)phenyl]propane (l +m = 30), 2,2-bis[4-acryloyloxy(polyethoxy)phenyl]propane (l + m = 10), or 2,2-bis[4-acryloyloxy(polyethoxy)phenyl]propane (l + m = 20).

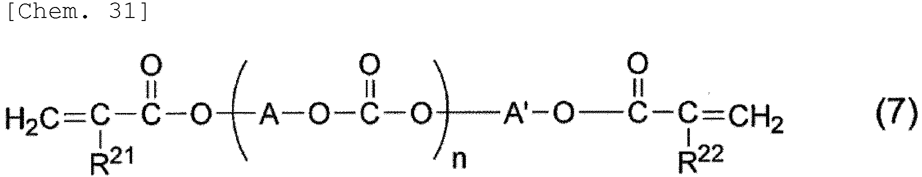

In the above formula, R²¹ and R²² are each a hydrogen atom or a methyl group;
n is a number of 1 to 20 on average;
A and A' may be the same as or different from each other, each of which is a linear or branched alkylene group having 2 to 15 carbon atoms, and if a plurality of A is present, the plurality of A may be the same as or different from each other.

The compound shown by Formula (7) above can be produced by reacting a polycarbonate diol with (meth)acrylic acid.

Examples of the polycarbonate diol to be used include:
a polycarbonate diol (one having a number average molecular weight of 500 to 2,000) obtained by phosgenation of a polyalkylene glycol such as trimethylene glycol, tetramethylene glycol, pentamethylene glycol, hexamethylene glycol, octamethylene glycol, or nonamethylene glycol;
a polycarbonate diol (number average molecular weight: 500 to 2,000) obtained by phosgenation of a mixture of two or more polyalkylene glycols such as a mixture of trimethylene glycol and tetramethylene glycol, a mixture of tetramethylene glycol and hexamethylene glycol, a mixture of pentamethylene glycol and hexamethylene glycol, a mixture of tetramethylene glycol and octamethylene glycol, or a mixture of hexamethylene glycol and octamethylene glycol; or
a polycarbonate diol (number average molecular weight: 500 to 2,000) obtained by phosgenation of 1-methyltrimethylene glycol.

A bifunctional (meth)acrylic polymerizable compound having a urethane bond may also be used as the (meth)acrylate compound.

The bifunctional (meth)acrylic polymerizable compound having a urethane bond is, for example, a reaction product of a polyol and a polyisocyanate. Examples of the polyisocyanate can include, for example, hexamethylene diisocyanate, isophorone diisocyanate, lysine isocyanate, 2,2,4-hexamethylene diisocyanate, dimer acid diisocyanate, isopropylidene bis-4-cyclohexyl isocyanate, dicyclohexylmethane diisocyanate, norbornene diisocyanate, norbornene methane diisocyanate, or methylcyclohexane diisocyanate.

On the other hand, examples of the polyol can include polyalkylene glycol having 2 to 4 carbon atoms and having repeating units of ethylene oxide, propylene oxide, or hexamethylene oxide, or a polyester diol such as polycaprolactonediol. A polycarbonate diol, a polybutadiene diol, or ethylene glycol, propylene glycol, 1,3-propanediol, 1,4-butanediol, 1,5-pentanediol, 1,6-hexanediol, 1,9-nonanediol, 1,8-nonanediol, neopentyl glycol, diethylene glycol, dipropylene glycol, 1,4-cyclohexanediol, 1,4-cyclohexanedimethanol, etc. may also be exemplified.

A urethane (meth)acrylate which is a reaction mixture obtained by reacting the polyisocyanate with the polyol to form a urethane prepolymer and then further reacting it with 2-hydroxy (meth)acrylate, or a reaction mixture obtained by directly reacting the diisocyanate with 2-hydroxy (meth)acrylate, etc. can also be used.

Examples of the bifunctional (meth)acrylic polymerizable compound having a urethane bond include U-2PPA (molecular weight: 482), UA-122P (molecular weight: 1,100), UA-122P (molecular weight: 1,100), U-108A, U-200PA, UA-511, U-412A, UA-4100, UA-4200, UA-4400, UA-2235PE, UA-160TM, UA-6100, UA-6200, U-108, UA-4000, UA-512 manufactured by SHIN-NAKAMURA CHEMICAL Co., Ltd., or EB4858 (molecular weight: 454) manufactured by DAICEL-ALLNEX LTD., or UX-2201, UX3204, UX4101, 6101, 7101, 8101 manufactured by Nippon Kayaku Co., Ltd, etc.

A bifunctional (meth)acrylic polymerizable compound other than those described above may also be used as the (meth)acrylate compound. Examples of such a (meth)acrylate compound include a compound having (meth)acrylic groups at both ends of an optionally substituted alkylene group. Such a (meth)acrylate compound is preferably an alkylene group having 6 to 20 carbon atoms. Specific examples thereof include 1,6-hexanediol diacrylate, 1,6-hexanediol dimethacrylate, 1,9-nonanediol diacrylate, 1,9-nonanediol dimethacrylate, 1,10-decanediol diacrylate, 1,10-decanediol dimethacrylate, etc.

Another (meth)acrylate compound includes a bifunctional (meth)acrylate monomer including a sulfur atom. The sulfur atom preferably constitutes a part of a molecular chain as a sulfide group. Specific examples thereof include bis(2-methacryloyloxyethylthioethyl)sulfide, bis(methacryloyloxyethyl)sulfide, bis(acryloyloxyethyl)sulfide, 1,2-bis(methacryloyloxyethylthio)ethane, 1,2-bis(acryloyloxyethyl)ethane, bis(2-methacryloyloxyethylthioethyl)sulfide, bis(2-acryloyloxyethylthioethyl)sulfide, 1,2-bis(methacryloyloxyethylthioethyl)ethane, 1,2-bis(acryloyloxyethylthioethylthio)ethane, 1,2-bis(methacryloyloxyisopropylthioisopropyl)sulfide, or 1,2-bis(acryloyloxyisopropylthioisopropyl)sulfide.

For the above-described (meth)acrylate compounds, a single component in each component may be used or a plurality of types of them may also be used as described above.

Next, a multifunctional (meth)acrylic polymerizable compound will be described. The multifunctional (meth)acrylic polymerizable compound includes a compound shown by Formula (8) below: 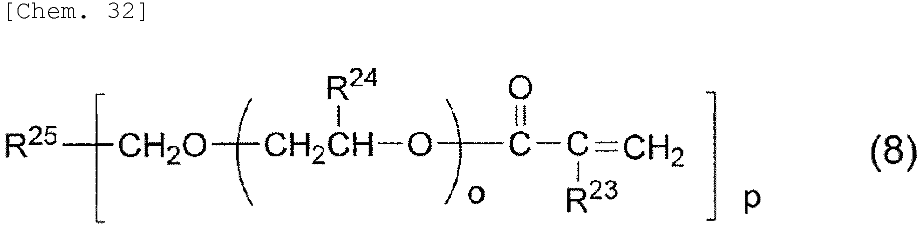 in which R²³ is a hydrogen atom or a methyl group;
R²⁴ is a hydrogen atom or an alkyl group having 1 to 2 carbon atoms;
R²⁵ is a tri- to hexavalent organic group having 1 to 10 carbon atoms;
o is a number of 0 to 3 on average; and p is a number of 3 to 6. The alkyl group having 1 to 2 carbon atoms for R²⁴ is preferably a methyl group. The organic group for R²⁵ may be a group derived from a polyol, a tri- to hexavalent hydrocarbon group, or an organic group having a tri- to hexavalent urethane bond.

Specific examples of the compound shown by Formula (8) above include:
trimethylolpropane trimethacrylate, trimethylolpropane triacrylate, tetramethylolmethane trimethacrylate,
tetramethylolmethane triacrylate, tetramethylolmethane tetramethacrylate, tetramethylolmethane tetraacrylate,
trimethylolpropane triethylene glycol trimethacrylate,
trimethylolpropane triethylene glycol triacrylate,
ditrimethylolpropane tetramethacrylate, or
ditrimethylolpropane tetraacrylate.

Examples of the multifunctional (meth)acrylic polymerizable compound include a multifunctional (meth)acrylic polymerizable compound having a urethane bond, etc. The multifunctional (meth)acrylic polymerizable compound having a urethane bond is obtained by reacting a polyisocyanate compound as described for the bifunctional (meth)acrylic polymerizable compound having a urethane bond with a polyol compound such as glycerin, trimethylolpropane, pentaerythritol, or dipentaerythritol, and is a compound having three or more (meth)acrylate groups in its molecule. Examples of a commercially available product thereof can include U-4HA (molecular weight: 596, number of functional groups: 4), U-6HA (molecular weight: 1,019, number of functional groups: 6), U-6LPA (molecular weight: 818, number of functional groups: 6), or U -15HA (molecular weight: 2,300, number of functional groups: 15) manufactured by SHIN-NAKAMURA CHEMICAL Co., Ltd.

A compound other than those mentioned above may also be used as the multifunctional (meth)acrylic polymerizable compound. Such a multifunctional (meth)acrylic polymerizable compound may be a polyester compound having an end modified with a (meth)acrylic group. Various commercially available polyester (meth)acrylate compounds can be used depending on a molecular weight of a polyester compound to be used as a raw material or an amount modified by the (meth)acrylic group. Specific examples thereof can include a tetrafunctional polyester oligomer (molecular weight: 2,500 to 3,500, EB80 manufactured by DAICEL-ALLNEX LTD., etc.), a hexafunctional polyester oligomer (molecular weight: 6,000 to 8,000, EB450 manufactured by DAICEL-ALLNEX LTD., etc.), a hexafunctional polyester oligomer (molecular weight: 45,000 to 55,000, EB1830 manufactured by DAICEL-ALLNEX LTD., etc.), a tetrafunctional polyester oligomer (especially GX8488B having a molecular weight of 10,000 manufactured by DKS Co. Ltd., etc.), etc.

Use of the multifunctional (meth)acrylic polymerizable compound as exemplified above can result in a crosslink density increased by polymerization and thus higher surface hardness of the resulting cured product. Therefore, the multifunctional (meth)acrylic polymerizable compound is preferably used especially in the case of a photochromic cured product (laminate) obtained by a coating method.

For the above-described multifunctional (meth)acrylic polymerizable compounds, a single component in each component may be used or a plurality of types of them may also be used.

Next, a monofunctional (meth)acrylic polymerizable compound will be described. The monofunctional (meth)acrylic polymerizable compound includes a compound shown by Formula (9) below: 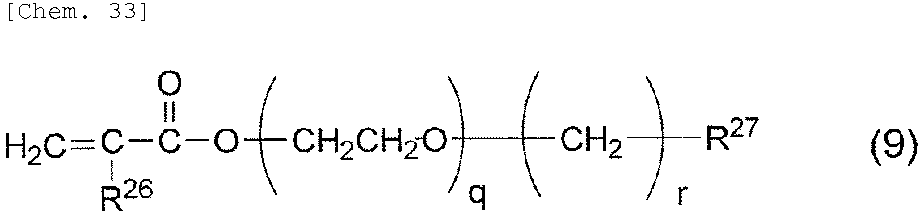 in which R²⁶ is a hydrogen atom or a methyl group;
R²⁷ is a hydrogen atom, an isocyanate group, an isothiocyanate group, a methyldimethoxysilyl group, a trimethoxysilyl group, or a glycidyl group;
q is an integer of 0 to 10; and
r is an integer of 0 to 20.

Specific examples of the compound shown by Formula (9) above include:
methoxy polyethylene glycol methacrylate (especially one having an average molecular weight of 293), methoxy polyethylene glycol methacrylate (especially one having an average molecular weight of 468), methoxy polyethylene glycol acrylate (especially one having an average molecular weight of 218), methoxy polyethylene glycol acrylate (especially one having an average molecular weight of 454), stearyl methacrylate, lauryl methacrylate, methyl acrylate, ethyl acrylate, butyl acrylate, octyl acrylate, lauryl acrylate, 2-isocyanatoethyl methacrylate, γ-methacryloyloxypropyltrimethoxysilane, γ-methacryloyloxypropyl methyl dimethoxysilane, or glycidyl methacrylate.

### (Functional dye)

A functional dye includes, for example, at least one selected from the group consisting of a photochromic compound, a UV absorbing agent, a blue light absorbing agent, an infrared absorbing agent, and an electromic compound.

For example, at least one selected from the group consisting of a chromene compound, a fulgide compound, and a spiroxazine compound is used as the photochromic compound. The photochromic compound is preferably a chromene compound. The chromene compound includes a compound having a 1-benzopyran skeleton, a spiropyran compound having a spiropyran skeleton, or a naphthopyran compound having a naphthopyran skeleton. The naphthopyran compound includes an indenonaphthopyran compound having an indenonaphthopyran skeleton. The chromene compound preferably includes an indenonaphthopyrana compound having an indeno[2,1-f]naphtho[1,2-b]pyran skeleton. A cured product including a chromene compound having an indeno[2,1-f]naphtho[1,2-b]pyran skeleton tends to have excellent durability. The indenonaphthopyran compound preferably includes a compound shown by Formula (IIIa) below: 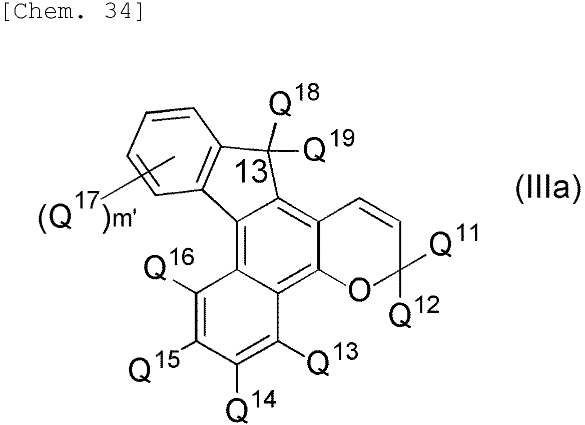 in which Q¹¹, Q¹², Q¹³, Q¹⁴, Q^{15,} Q¹⁶, and Q¹⁷ are each independently a hydrogen atom, a hydroxy group, a methoxycarbonyl group, an ethoxycarbonyl group, an alkyl group, a cycloalkyl group, a haloalkyl group, an alkoxy group, an amino group, a substituted amino group, an optionally substituted heterocyclic group, a halogen atom, an alkylthio group, an optionally substituted arylthio group, a nitro group, a formyl group, a hydroxycarbonyl group, an alkylcarbonyl group, an alkoxycarbonyl group, an optionally substituted aralkyl group, an optionally substituted aralkoxy group, an optionally substituted aryloxy group, an optionally substituted aryl group, an optionally substituted heteroaryl group, a thiol group, an alkoxyalkylthio group, a haloalkylthio group, an optionally substituted cycloalkylthio group, or an oligomeric group.

The alkyl group preferably has 1 to 10 carbon atoms. Examples of the alkyl group include a methyl group, an ethyl group, an n-propyl group, an isopropyl group, an n-butyl group, a sec-butyl group, a tert-butyl group, a pentyl group, or a hexyl group.

The haloalkyl group preferably has 1 to 10 carbon atoms. The haloalkyl group is preferably an alkyl group substituted with a fluorine atom, a chlorine atom, or a bromine atom. Suitable examples of the haloalkyl group include a trifluoromethyl group, a tetrafluoroethyl group, a chloromethyl group, a 2-chloroethyl group, or a bromomethyl group.

A member of a cycle in the cycloalkyl group preferably has 3 to 8 carbon atoms. Examples of the cycloalkyl group include a cyclopropyl group, a cyclobutyl group, a cyclopentyl group, a cyclohexyl group, etc. Note that, the cycloalkyl group may have a substituent, but a number of carbon atoms (3 to 8 carbon atoms) shall not include a number of carbon atoms in the substituent.

The alkoxy group preferably has 1 to 10 carbon atoms and more preferably 1 to 6 carbon atoms. Suitable examples of the alkoxy group include a methoxy group, an ethoxy group, an n-propoxy group, an isopropoxy group, an n-butoxy group, a sec-butoxy group, or a tert-butoxy group.

The amino group refers to a primary amino group (-NH₂), and the substituted amino group refers to a secondary or tertiary amino group with one or two hydrogen atoms substituted. Examples of a substituent that the substituted amino group has include an alkyl group having 1 to 6 carbon atoms, a haloalkyl group having 1 to 6 carbon atoms, an alkoxy group having 1 to 6 carbon atoms, a cycloalkyl group having 3 to 7 carbon atoms, an aryl group having 6 to 14 carbon atoms, a heteroaryl group having 4 to 14 carbon atoms, etc. Suitable examples of the amino group can include an amino group, a methylamino group, a dimethylamino group, an ethylamino group, a diethylamino group, a phenylamino group, a diphenylamino group, etc.

The heterocyclic group preferably has 3 to 10 carbon atoms. The heterocyclic group may be an aliphatic heterocyclic group or an aromatic heterocyclic group. Specific examples of the aliphatic heterocyclic group include a morpholino group, a piperidino group, a pyrrolidinyl group, a piperazino group, an N-methylpiperazino group, etc. Specific examples of the aromatic heterocyclic ring include an indolinyl group. The heterocyclic ring may have a substituent. The substituent is preferably an alkyl group having 1 to 10 carbon atoms. Suitable examples of a substituted heterocyclic group include a 2,6-dimethylmorpholino group, a 2,6-dimethylpiperidino group, or a 2,2,6,6-tetramethylpiperidino group, etc.

Examples of the halogen atom include a fluorine atom, a chlorine atom, a bromine atom, an iodine atom, etc.

The alkylthio group preferably has 1 to 10 carbon atoms. Examples of the alkylthio group include a methylthio group, an ethylthio group, an n-propylthio group, an isopropylthio group, an n-butylthio group, a sec-butylthio group, a t-butylthio group, etc.

The arylthio group preferably has 6 to 10 carbon atoms. Examples of the arylthio group include a phenylthio group, a 1-naphthylthio group, a 2-naphthylthio group, etc.

The alkylcarbonyl group preferably has 2 to 10 carbon atoms. Examples of the alkylcarbonyl group include an acetyl group, an ethylcarbonyl group, etc.

The alkoxycarbonyl group preferably has 2 to 10 carbon atoms. Examples of the alkoxycarbonyl group include a methoxycarbonyl group, an ethoxycarbonyl group, etc.

The aralkyl group preferably has 7 to 11 carbon atoms. Examples of the aralkyl group include a benzyl group, a phenylethyl group, a phenylpropyl group, a phenylbutyl group, a naphthylmethyl group, etc.

The aralkoxy group preferably has 7 to 11 carbon atoms. Examples of the aralkoxy group include a benzyloxy group, a naphthylmethoxy group, etc.

The aryl group preferably has 6 to 12 carbon atoms. Examples of the aryl group include a phenyl group, a 1-naphthyl group, a 2-naphthyl group, etc.

The aryloxy group preferably has 6 to 12 carbon atoms. Examples of the aryloxy group include a phenyloxy group, a naphthyloxy group, etc.

The heteroaryl group preferably has 3 to 12 carbon atoms. Examples of the heteroaryl group include a thienyl group, a furyl group, a pyrrolinyl group, a pyridyl group, a benzothienyl group, a benzofuranyl group, a benzopyrrolinyl group, etc.

The alkoxyalkylthio group preferably has 2 to 10 carbon atoms. Examples of the alkoxyalkylthio group include a methoxymethylthio group, a methoxyethylthio group, a methoxy n-propylthio group, a methoxy n-butylthio group, an ethoxytehylthio group, an n-propoxypropylthio group, etc.

The haloalkylthio group preferably has 1 to 10 carbon atoms. Examples of the haloalkylthio group include a trifluoromethylthio group, a tetrafluoroethylthio group, a chloromethylthio group, a 2-chloroethylthio group, a bromomethylthio group, etc.

The cycloalkylthio group preferably has 3 to 8 carbon atoms. Examples of the cycloalkylthio group include a cyclopropylthio group, a cyclobutylthio group, a cyclopentylthio group, a cyclohexylthio group, etc. Note that, the cycloalkylthio group may have a substituent, but a number of carbon atoms (3 to 8 carbon atoms) shall not include a number of carbon atoms in the substituent.

The oligomeric group includes an oligomeric chain, a linking group, and a terminal group.

The oligomer chain can include at least one selected from the group consisting of a polyalkylene oxide chain, a polysiloxane chain, and a polyester chain. The oligomer chain is a divalent group.

The polyalkylene oxide chain includes a linear or branched polyalkylene oxide having 1 or more and 10 or less carbon atoms as a repeating unit. A number of repetitions of the repeating unit is, for example, 3 or more and 1000 or less. The repeating unit is, for example, -CH₂O-, -CH₂CH₂O-, - CH (CH₃) CH₂O-, -CH₂CH (CH₃) O-, -CH₂CH₂CH₂O-, or -CH₂CH₂C (CH₃) O-.

The polysiloxane chain has, for example, dimethylsilyleneoxy (-Si(CH₃)₂O-) as a repeating unit. A number of repetitions of the repeating unit is, for example, 3 or more and 1000 or less.

The polyester chain includes, for example, -OC(=O)CH₂-, - OC(=O) CH₂CH₂CH₂CH₂C(=O)O-, or -OC(=O) CH₂CH₂CH₂CH₂C(=O)OCH₂CH₂-) as a repeating unit. A number of repetitions of the repeating unit is, for example, 3 or more and 1000 or less.

The linking group links a photochromic compound to one end of an oligomer chain. The linking group is, for example, - O-, -O-CH₂CH₂-O-, -O-CH₂CH₂-OC(=O)CH₂CH₂C(=O) -O-, or -O-CH₂CH₂-OC(=O)CH₂CH₂C(=O)-O-CH₂-. The linking group may be a divalent group or a divalent or more group.

The terminal group binds to the other end of the oligomeric chain. The terminal group is, for example, a linear or branched alkyl group having 1 or more and 10 or less carbon atoms, a linear or branched alkoxy group having 1 or more and 10 or less carbon atoms, or a linear or branched alkenyl group having 2 or more and 30 or less carbon atoms. The terminal group is preferably a methyl group.

An oligomeric group may include a first linking group, an oligomeric chain, and a second linking group. The first linking group and the second linking group may have a structure identical to or different from each other. The first linking group is linked to a first photochromic compound. The second linking group is linked to a second photochromic compound. The first photochromic compound and the second photochromic compound may have a structure identical to or different from each other.

The cycloalkyl group, the arylthio group, the aralkyl group, the aralkoxy group, the aryloxy group, the aryl group, the heteroaryl group, and the cycloalkylthio group may be unsubstituted or may have a substituent.

The substituent the cycloalkyl group, the arylthio group, the aralkyl group, the aralkoxy group, the aryloxy group, the aryl group, the heteroaryl group, or the cycloalkylthio group may have may be selected from the group consisting of a primary amino group, a secondary amino group, a tertiary amino group, an alkyl group having 1 to 10 carbon atoms, a haloalkyl group having 1 to 10 carbon atoms, an alkoxy group having 1 to 10 carbon atoms, a haloalkoxy group having 1 to 10 carbon atoms, an alkylthio group having 1 to 10 carbon atoms, a hydroxy group, a cycloalkyl group having 3 to 8 carbon atoms, an aryl group having 6 or more and 12 or less carbon atoms, an alkylaryl group having 1 or more and 20 or less carbon atoms, a heterocycloalkyl group having 1 or more and 8 or less carbon atoms and 1 or more and 5 or less heteroatoms, a heteroaryl group having 1 or more and 8 or less carbon atoms and 1 or more and 5 or less heteroatoms, an aryloxy group having 6 or more and 12 or less carbon atoms, an arylthio group having 6 or more and 12 or less carbon atoms, a cyano group, a nitro group, a halogen atom, and an oligomeric group. A number of the substituent may be 1 or 2 or more.

Q¹³ and Q^{14,} Q¹⁴ and Q¹⁵, and Q¹⁵ and Q¹⁶ may be combined with each other to form an aliphatic ring having 2 or more and 5 or less carbon atoms, an aliphatic heterocyclic ring having 1 or more and 4 or less carbon atoms and 1 or more and 3 or less heteroatoms, an aromatic ring having 4 or more and 12 or less carbon atoms, or an aromatic heterocyclic ring having 3 or more and 11 or less carbon atoms and 1 or more and 6 or less heteroatoms. The aliphatic ring, the aliphatic heterocyclic ring, the aromatic ring, and the aromatic heterocyclic ring may be unsubstituted or may have at least one substituent selected from the above-described substituent group.

Q¹⁸ and Q¹⁹ are preferably combined with each other to form a substituted or unsubstituted spirocycle with a carbon atom at position 13 as a spiroatom. The spirocycle may be an aliphatic ring, a fused polycyclic ring, a heterocyclic ring, or a heterocyclic aromatic ring. The spirocycle is preferably a 5- to 16-membered aliphatic ring. The aliphatic ring further preferably has an alkyl group having 1 to 3 carbon atoms as a substituent.

Q¹⁸ and Q¹⁹ are each independently a group represented by the formula: -Q¹⁰⁰-(X¹⁰⁰Q¹⁰¹)_{θ}-X¹⁰¹Q¹⁰², a substituted or unsubstituted haloalkyl group having 1 or more and 20 or less carbon atoms, or a linear or branched alkyl group having 1 or more and 10 or less carbon atoms.

Q¹⁰⁰ is an alkylene group that may include a halogen atom in a substituent. The alkylene group has preferably 1 or more and 20 or less carbon atoms, more preferably 1 or more and 12 or less carbon atoms, further preferably 1 or more and 7 or less carbon atoms, and most preferably 2 or more and 6 or less carbon atoms. At least one halogen atom selected from the group consisting of I, Cl, Br, and F may be used.

Q¹⁰¹ is an alkylene group that may include a halogen atom in a substituent. A preferred aspect of the number of carbon atoms or the halogen atom in the alkylene group is the same as for Q¹.

Q¹⁰² is an alkyl group that may include a halogen atom in a substituent. The alkyl group preferably has 1 or more and 20 or less carbon atoms, more preferably 1 or more and 12 or less carbon atoms, further preferably 1 or more and 7 or less carbon atoms, and most preferably 2 or more and 6 or less carbon atoms.

X¹⁰⁰ and X¹⁰¹ are each independently O, S, N, or P. X¹⁰¹ and X¹⁰² are preferably O, S, or N, more preferably O or S, and most preferably O.
8 is 0 or 1.

Specific examples of the formula include -CH₂OCH₃, - CH₂SCH₃, -CH₂CH₂OCH₃, -CH₂CH₂OCH₂CH₃, -CH₂CH₂SCH₃, -CH₂CH₂CH₂OCH₃, - CH₂CH₂CH₂SCH₃, -CH₂CH₂OCH₂CH₂OCH₃, -CH₂CH₂OCH₂CH₂OCH₂CH₃, etc.

The haloalkyl group more preferably has 1 or more and 12 or less carbon atoms, further preferably 1 or more and 7 or less carbon atoms, and most preferably 2 or more and 6 or less carbon atoms. At least one halogen atom selected from the group consisting of I, Cl, Br, and F may be used. The halogen atom is preferably at least one of C1 and F and more preferably F.

The haloalkyl group preferably has one or more halogen atoms, preferably three halogen atoms attached to a terminal carbon atom. A haloalkyl group having a halogen atom attached to a terminal carbon atom tends to easily cause steric hindrance.

The haloalkyl group is, for example, represented by Formula (A) below:

-C_{α}H_{β}Z_{γ} (A)

In Formula (A), α is a number of carbon atoms.
α is preferably 1 or more and 10 or less and more preferably 2 or more and 6 or less.
β is a number of hydrogen atoms.
β is, for example, 1 or more and 20 or less, preferably 2 or more and 12 or less, and more preferably 4 or more and 10 or less. However, β + γ = 2α + 1. Z denotes a halogen atom.
γ is a number of halogen atoms.
γ is, for example, 1 or more and 20 or less, preferably 2 or more and 12 or less, and more preferably 3 or more and 6 or less.

A UV absorbing agent has an absorption wavelength in an ultraviolet (UV) region of 400 nm or less. The UV absorbing agent may have a maximum absorption wavelength in a region of 330 nm or more and 380 nm or less or 250 nm or more and 330 nm or less. The ultraviolet absorbing agent may be an organotin compound. For example, at least one selected from the group consisting of a benzophenone derivative, ethylhexyl methoxycinnamate, a benzotriazole derivative, and a triazine derivative is used as the UV absorbing agent. The UV absorbing agent preferably includes at least one selected from the group consisting of a benzophenone derivative, ethylhexyl methoxycinnamate, and a benzotriazole derivative.

A compound having an absorption peak in a wavelength region of more than 400 nm and 450 nm or less in an absorption spectrum can be used as a blue light absorber. Such a compound is, for example, at least one selected from the group consisting of a perylene compound, a porphyrin compound, a carotenoid compound, and a cyanine compound. The blue light absorbing agent is preferably a porphyrin compound and more preferably a tetraazaporphyrin compound.

A high-energy visible light absorbing agent is a blue light absorbing agent with an absorption peak in a wavelength region of more than 400 nm and 420 nm or less. The high-energy visible light absorbing agent may be the same as the blue light absorbing agent.

A dye preferably includes a compound having an absorption peak in a wavelength region of 540 nm or more and 650 nm or less in an absorption spectrum, and more preferably a compound having an absorption peak in a wavelength region of 550 nm or more and 600 nm or less. When such a compound is included, a cured product can have an enhanced antiglare property. Examples of such a compound include a nitro compound, an azo compound, an anthraquinone compound, a threne compound, a porphyrin compound, a rare earth metal compound, etc. Such a compound is preferably at least one selected from the group consisting of a tetraazaporphyrin compound and a neodymium compound.

Examples of an electromic compound include an organic matter such as viologen, a polymer having an electromic property, a metal salt complex having a d atom, etc.

A functional dye accounts for, for example, 0.1% by mass or more and 10% by mass or less, preferably 1% by mass or more and 5% by mass or less of a solid content of an optical material composition.

### (Other additives)

An optical material composition may include various additives to the extent that the effect is not impaired. The additive such as a polymerization accelerating agent, a polymerization initiating agent, a functional dye, a UV absorbing agent, an antistatic agent, an IR absorbing agent, a UV stabilizing agent, an antioxidizing agent, a color protection agent, an antistatic agent, a fluorescent dye, a dye, a pigment, a fragrance, etc., a solvent, a leveling agent, an internal mold release agent, and even a polymerization modifying agent, for example, a thiol such as t-dodecyl mercaptan can be incorporated if necessary.

### (Curing accelerating agent)

A urethane optical material composition may further include various polymerization-curing accelerating agents in order to quickly accelerate a polymerization-curing thereof depending on a type of the above-described components. A reaction catalyst for urethane or urea or a condensing agent to be used in a reaction of a hydroxy group and a thiol group with an isocyanate group and an isothiacyanate group is used as the polymerization-curing accelerating agent.

Such a reaction catalyst for urethane or urea is used in formation of a poly(thio)urethane bond by a reaction of a polyiso(thio)cyanate with a polyol or a polythiol. Examples of the reaction catalyst for urethane or urea can include a tertiary amine and an inorganic or organic salt corresponding thereto, a phosphine, a quaternary ammonium salt, a quaternary phosphonium salt, a Lewis acid, an organic sulfonic acid, etc. Specific examples thereof include those described below. Depending on a type of the above-mentioned compound to be selected, if a catalytic activity is too high, a catalytic activity can be decreased by using a mixture of a tertiary amine and a Lewis acid.

Tertiary amine; triethylamine, tri-n-propylamine, triisopropylamine, tri-n-butylamine, triisobutylamine, triethylamine, hexamethylenetetramine, N,N-dimethyloctylamine, N,N,N',N'-tetramethyl-1,6-diaminohexane, 4,4'-trimethylenebis(1-methylpiperidine), 1,8-diazabicyclo-(5,4,0)-7-undecene
Phosphine; trimethylphosphine, triethylphosphine, tri-n-propylphosphine, triisopropylphosphine, tri-n-butylphosphine, triphenylphosphine, tribenzylphosphine, 1,2-bis(diphenylphosphino)ethane, 1,2-bis(dimethylphosphino)ethane
Quaternary ammonium salt; tetramethylammonium bromide, tetrabutylammonium chloride, tetrabutylammonium bromide
Quaternary phosphonium salt; tetramethylphosphonium bromide, tetrabutylphosphonium chloride, tetrabutylphosphonium bromide
Lewis acid; triphenylaluminum, dimethyltin dichloride, dimethyltin bis(isooctylthioglycolate), dibutyltin dichloride, dibutyltin dilaurate, dibutyltin maleate, a dibutyltin maleate polymer, dibutyltin diricinolate, dibutyltin bis(dodecylmercaptide), dibutyltin bis(isooctylthioglycolate), dioctyltin dichloride, dioctyltin maleate, a dioctyltin maleate polymer, dioctyltin bis(butyl maleate), dioctyltin dilaurate, dioctyltin diricinolate, dioctyltin dioleate, dioctyltin di(6-hydroxy)caproate, dioctyltin bis(isooctylthioglycolate), didodecyltin diricinolate
Organic sulfonic acid; methanesulfonic acid, benzenesulfonic acid, p-toluenesulfonic acid.

Specific examples of the condensing agent can include those described below:
Inorganic acid; hydrogen chloride, hydrogen bromide, sulfuric acid, phosphoric acid, etc. Organic acid; p-toluenesulfonic acid, camphor-sulfonic acid, etc. Acidic ion exchange resin; Amberlite, Amberlist, etc. Carbodiimide;
dicyclohexylcarbodiimide, 1-ethyl-3-(3-dimethylaminopyrrolyl)-carbodiimide

The above-described polymerization accelerating agent can be used alone or two or more thereof can be used in combination. An amount thereof to be used may be the so-called catalyst amount. For example, the amount may be a small amount in a range of 0.001 parts by mass to 10 parts by mass, especially 0.01 parts by mass to 5 parts by mass relative to 100 parts by mass of a sum of the polyiso(thio)cyanate compound and the polyol compound.

### (Polymerization initiating agent)

At least one of a thermal polymerization initiating agent and a photoinitiating agent is used as a polymerization initiator.

For the thermal polymerization initiating agent, a diacyl peroxide such as benzoyl peroxide, p-chlorobenzoyl peroxide, decanoyl peroxide, lauroyl peroxide, or acetyl peroxide may be used.

A peroxyester such as t-butylperoxy-2-ethylhexanate, t-butylperoxyneodecanoate, cumylperoxyneodecanoate, or t-butylperoxybenzoate may also be used. A percarbonate such as diisopropyl peroxydicarbonate or di-sec-butyl peroxydicarbonate may also be used. An azo compound such as azobisisobutyronitrile or 2,2'-azobis(2,4-dimethylvaleronitrile) may also be used.

For the photoinitiating agent, an acetophenone compound such as 1-phenyl-2-hydroxy-2-methylpropan-1-one, 1-hydroxycyclohexylphenyl ketone, or 1-(4-isopropylphenyl)-2-hydroxy-2-methylpropan-1-one may be used.

Alpha-dicarbonyl compound such as 1,2-diphenylethanedione or methylphenylglycoxylate may also be used. An acylphosphine oxide compound such as 2,6-dimethylbenzoyldiphenylphosphine oxide, 2,4,6-trimethylbenzoyldiphenylphosphine oxide, 2,4,6-trimethylbenzoyldiphenylphosphinic acid methyl ester, 2,6-dichlorobenzoyldiphenylphosphine oxide, 2,6-dimethoxybenzoyldiphenylphosphine oxide, or phenylbis(2,4,6-trimethylbenzoyl)phosphine oxide may also be used.

When the photoinitiating agent is used, a known polymerization-curing accelerating agent such as a tertiary amine can also be used in combination.

### (Antioxidizing agent)

For an antioxidizing agent, 2,6-di-tert-butyl-4-methylphenol, IRGANOX 245 manufactured by BASF Japan Ltd.: ethylenebis(oxyethylene) bis[3,5-tert-butyl-4-hydroxy-m-toluyl]propionate], IRGANOX 1076 manufactured by BASF Japan Ltd.: octadecyl-3-(3,5-di-tert-butyl-4-hydroxyphenyl) propionate, IRGANOX 1010 manufactured by BASF Japan Ltd.: pentaerythritol tetrakis[3-(3,5-di-tert-butyl-4-hydroxyphenyl)propionate], IRGANOX 1035, 1075, 104, 3790, 5057, 565 manufactured by BASF Japan Ltd., etc. can be used.

For a leveling agent, a silicone surfactant, a fluorine-containing surfactant, etc. can be used. Specifically, L-7001, L-7002, L-7604, FZ-2123 manufactured by Dow Toray Co., Ltd.; MEGAFACE F-470, MEGAFACE F-1405, MEGAFACE F-479 manufactured by DIC Corporation; FLORAD FC-430 manufactured by 3M Japan Limited, etc. can be used.

### (Photostabilizing agent)

For a photostabilizing agent, a hindered amine compound having a 2,2,6,6-tetramethyl-4-piperidyl skeleton is preferably used and a commercially available product can be used. For example, bis(2,2,6,6-tetramethyl-4-piperidyl)sebacate, bis(1,2,2,6,6-pentamethyl-4-piperidyl)sebacate, bis(1-octyloxy-2,2,6,6-tetramethyl-4-piperidyl)sebacate, 1-[2-{3-(3,5-di-t-butyl-4-hydroxyphenyl)propionyloxy}ethyl]-4-{3-(3,5-di-t-butyl-4-hydroxyphenyl)propionyloxy}-2,2,6,6-tetramethylpiperidine, 4-benzoyloxy-2,2,6,6-tetramethylpiperidine, methyl(1,2,2,6,6-pentamethyl-4-piperidyl)sebacate, 1,2,2,6,6-pentamethyl-4-piperidinyl methacrylate, 2-[[3,5-bis(1,1-dimethylethyl)-4-hydroxyphenyl]methyl]-2-butylpropanedioic acid [1,2,2,6,6-pentamethyl-4-piperidinyl], poly[{6-(1,1,3,3-tetramethylbutyl)amino-1,3,5-triazine-2,4-diyl}{ (2,2,6,6-tetramethyl-4-piperidyl)imino}hexamethylene {(2,2,6,6-tetramethyl-4-piperidyl)imino}], 1,2,2,6,6-pentamethyl-4-piperidyl methacrylate, etc. may be used. Examples of a product name of the commercially available product include ADEKASTAB (registered trademark) LA series (LA-52, LA-57, LA-63P, LA-68, LA-72, LA-77Y, LA-81, LA-82, etc.) manufactured by ADEKA CORPORATION; TINUVIN (registered trademark) series (TINUVIN 123, TINUVIN 171, TINUVIN 249, TINUVIN 292, TINUVIN 765, TINUVIN 622SF, etc.), CHIMASSORB (registered trademark) series (CHIMASSORB 2020FDL, CHIMASSORB 944FDL) manufactured by BASF Japan Ltd., etc.

### (Organic solvent)

An optical material composition may include an organic solvent in order to adjust its viscosity. The organic solvent can include at least one selected from the group consisting of tetrahydrofuran, diethyl ketone, t-butyl alcohol, isopropyl alcohol, propylene glycol monomethyl ether, toluene, ethyl acetate, and cyclohexanone. The organic solvent accounts for, for example, 30% by mass or more and 80% by mass or less of an optical material composition.

### (Internal mold release agent)

An internal mold release agent can also be used if an optical article has a poor mold release property. Any internal mold release agent can be used as long as it has a mold-releasing effect and does not impair a physical property such as transparency of a resin, and a surfactant is preferably used. A phosphate ester surfactant is particularly preferred. As used herein, the internal mold release agent also includes those exhibiting a mold-releasing effect among the above-described various catalysts, and, for example, may include a quaternary ammonium salt or a quaternary phosphonium salt. Such an internal mold release agent is appropriately selected based on a combination with a monomer, a polymerization condition, economic efficiency, or ease of handling. Specific examples of a phosphate ester internal mold release agent include those described below.

For example, alkyl acid phosphate; mono-n-butyl phosphate, mono-2-ethylhexyl phosphate, mono-n-octyl phosphate, mono-n-butyl phosphate, bis(2-ethylhexyl)phosphate, di(2-ethylhexyl) phosphate, di-n-octyl phosphate, di-n-butyl phosphate, butyl acid phosphate (mono-, di-mixture), ethyl acid phosphate (mono-, di-mixture), butoxyethyl acid phosphate (mono-, di-mixture), 2-ethylhexyl acid phosphate (mono-, di-mixture), isotridene acid phosphate (mono-, di-mixture), tetracosyl acid phosphate (mono-, di-mixture), stearyl acid phosphate (mono-, di-mixture),
other phosphate esters; oleyl acid phosphate (mono-, di-mixture), dibutyl pyrophosphate, ethylene glycol acid phosphate (mono-, di-mixture), butoxyethyl acid phosphate (mono-, di-mixture), etc. are exemplified.

### [Cured product]

A cured product is obtained by curing an optical material composition according to the embodiment. A method of curing may be, for example, radical polymerization, ring-opening polymerization, anionic polymerization, or condensation polymerization by irradiation with an active energy ray such as UV, α-ray, β-ray, or γ-ray, heat, or a combination thereof.

The method of curing is appropriately determined based on a type of a compound for matrix formation. For example, if the compound for matrix formation includes a compound having a radical-polymerizable group, photo-polymerization is suitable. If the compound for matrix formation includes a compound having a polyaddition reactive group and a compound having a reactive group reactive with the polyaddition reactive group, a thermal polymerization is suitable.

Note that, if the compound for matrix formation includes a compound having a polyaddition reactivity group, an optical material composition is mixed with a compound having a reactive group reactive with the polyaddition reactivity group, and the resulting curable composition is subjected to thermal polymerization. If the compound for matrix formation includes a compound having a reactive group reactive with a polyaddition reactivity group, an optical material composition is mixed with a compound having a polyaddition reactivity group, and the resulting curable composition is subjected to thermal polymerization.

For an optical material composition including a polyaddition-reactive group and a reactive group reactive therewith, a number of moles of the polyaddition-reactive group may be equal to that of the reactive group, or one may be in excess relative to the other. For example, an excessive number of moles of an isocyanate group results in an optical material composition including a urethane prepolymer.

The optical material composition including a urethane prepolymer is obtained, for example, as described below. First, a polyol and a polyisocyanate compound are reacted in the presence of an excessive number of moles of an isocyanate group to obtain a urethane prepolymer. The urethane prepolymer is reacted with a polyamine in the presence of an isocyanate group in excess to obtain a urethane-urea prepolymer.

An optical material composition including at least one of a urethane prepolymer and a urethane-urea prepolymer can be suitably used as a composition for forming an adhesive layer.

### [Optical article and production method thereof]

An optical article includes a cured product of an optical material composition according to the embodiment. Examples of the optical article include a lens, window glass for home or automobile, a liquid crystal display, a sun visor, a watch, etc. The lens includes a semi-finished lens or a finished lens.

An optical article according to the embodiment is particularly suitable for a photochromic optical article. The photochromic optical article includes a cured product of a curable composition including the photochromic compound. The photochromic optical article includes a photochromic lens. The photochromic lens can be produced by a known method such as a kneading method, a coating method, a glass lamination method, or a binder method.

In the case of the kneading method, the optical article can be produced, for example, by a casting polymerization method. First, an optical material composition is poured between glass molds held in place by an elastomeric gasket or a spacer and defoamed thoroughly. Then, the resultant is heated in an air oven or in water to obtain a cured product.

An optical material composition for the kneading method suitably includes an optical material compound represented by Formula (I), an isocyanate compound, an active hydrogen compound, an antioxidizing agent, a UV absorbing agent, and a curing accelerating agent. The optical material compound represented by Formula (I) is preferably a dithiol-type optical material compound from the viewpoint of transparency. The isocyanate compound preferably includes a diisocyanate. The isocyanate compound preferably includes at least one of an alicyclic isocyanate compound and an aromatic isocyanate compound, and more preferably includes both of them. The active hydrogen compound preferably includes a thiol and more preferably includes a polythiol. The optical material compound represented by Formula (I), the isocyanate compound, and the active hydrogen compound account for 5% by mass or more and 30% by mass or less, 30% by mass or more and 45% by mass or less, and 40% by mass or more and 50% by mass or less of the optical material composition for the kneading method, respectively.

In the case of the coating method, an optical article is obtained, for example, by coating an optical substrate such as a lens substrate with an optical material composition by means of spin coating, etc. and curing the resulting coated film.

An optical material composition for the coating method suitably includes an optical material compound represented by Formula (I), (meth)acrylate, rotaxane, an antioxidizing agent, a light stabilizing agent, a leveling agent, and a photoinitiating agent. The optical material compound represented by Formula (I) is preferably a diacrylate- or dimethacrylate-type optical material compound. The (meth)acrylate preferably includes at least two compounds selected from the group consisting of a monofunctional (meth)acrylic polymerizable compound, a bifunctional (meth)acrylate compound, a trifunctional (meth)acrylic polymerizable compound, and a tetrafunctional (meth)acrylic polymerizable compound, and more preferably includes all of them. The optical material compound represented by Formula (I), the monofunctional (meth)acrylic polymerizable compound, the bifunctional (meth)acrylate compound, the trifunctional (meth)acrylic polymerizable compound, and the tetrafunctional (meth)acrylic polymerizable compound account for 30% by mass or more and 50% by mass or less, 5% by mass or more and 20% by mass or less, 10% by mass or more and 25% by mass or less, and 5% by mass or more and 20% by mass or less of the optical material composition for the coating method, respectively.

An optical substrate is not particularly limited and a known plastic substrate may be used. Specific examples thereof include a plastic material such as a (meth)acrylic resin, a polycarbonate resin, an allyl resin, a thiourethane resin, a urethane resin, a thioepoxy resin, a polyvinyl alcohol resin, etc. A polarizing film may also be used as the optical substrate.

In order to increase adhesion to a coated film, a surface of the optical substrate may be chemically treated with an alkaline solution, an acid solution, etc., or physically treated with corona discharge, plasma discharge, polishing, etc. A transparent adhesive resin layer may also be provided on the surface of the optical substrate.

In the case of the glass lamination method, for example, an optical article is produced as described below. First, a pair of glass substrates is prepared. One of the glass substrates on which a spacer is provided is coated with an optical material composition, and the other is laminated on the resulting coated film. The coated film is cured to join the pair of glass substrates.

An optical material composition for the glass lamination method suitably includes an optical material compound represented by Formula (I), an isocyanate compound, an active hydrogen compound, an antioxidizing agent, a UV absorbing agent, and a curing accelerating agent. The optical material compound represented by Formula (I) is preferably a dithiol-type optical material compound from the viewpoint of transparency. The isocyanate compound preferably includes a diisocyanate. The isocyanate compound preferably includes at least one of an alicyclic isocyanate compound and an aromatic isocyanate compound, and more preferably includes both of them. The active hydrogen compound preferably includes a thiol and more preferably includes a polythiol. The optical material compound represented by Formula (I), the isocyanate compound, and the active hydrogen compound account for 20% by mass or more and 40% by mass or less, 20% by mass or more and 40% by mass or less, and 20% by mass or more and 40% by mass or less of the optical material composition for the glass lamination method, respectively.

In the case of the binder method, for example, an optical article is produced as described below. First, an optical substrate is coated with an optical material composition and the resulting coated film is dried to form an adhesive layer sheet. The resulting adhesive layer sheet is sandwiched between two transparent optical sheets to obtain a laminate. The optical substrate may be removed from the adhesive layer sheet and only the coated film may be laminated. The resulting laminate is heat-treated to polymerize the coated film. In this way, a binder sheet in which two optical sheets are joined via an adhesive layer is obtained. Instead of using the adhesive layer sheet, a coated film may be formed directly on at least one of the optical sheets. The binder sheet is mounted in a mold and then a thermoplastic resin such as polycarbonate is injection-molded to obtain an optical article having a predetermined shape. Alternatively, the binder sheet may be embedded in a resin by casting polymerization, etc.

An optical material composition for the binder sheet method suitably includes a urethane-urea prepolymer, an antioxidizing agent, and a leveling agent. The urethane-urea prepolymer is a reaction product of a urethane prepolymer and a polyamine. The urethane prepolymer is a reaction product of an optical material compound represented by Formula (I) and an isocyanate compound. A composition for the urethane prepolymer preferably includes an optical material compound represented by Formula (I), an isocyanate compound, and a solvent. The optical material compound represented by Formula (I) is preferably a dithiol-type optical material compound from the viewpoint of transparency.

A semi-finished lens obtained by the above-described method may be dyed, or laminated with a functional layer such as an antireflection film, a hard coat layer, a polarizing layer, a polarizing film, etc.

### EXAMPLES

The present invention will be described in more detail with reference to Examples exemplified below. These Examples are for illustrative purposes only and the spirit and the scope of the present invention are not limited to Examples.

### [Synthesis of optical material compound]

### (Synthesis of Compound 1)

First, 1,4-butanediol (70 g) and potassium hydroxide (1.2 g) serving as a catalyst were added to an autoclave. After nitrogen replacement of the air in the autoclave, the catalyst was dissolved at 120°C with stirring to obtain a first solution. The first solution was placed at 120°C and 0.2 to 0.5 MPa (gauge pressure), and propylene oxide (550 g) was added dropwise thereto, followed by stirring for 3 hours to obtain a second solution. At 120°C and 0.2 to 0.5 MPa (gauge pressure), ethylene oxide (440 g) was added dropwise to the second solution, followed by stirring for 1 hour. The resulting reaction product was then removed from the autoclave, the pH was adjusted to 6 to 7 with hydrochloric acid, and the resultant was dried under reduced pressure at 110°C for 1 hour (gauge pressure: 0.095 Mpa) to remove water contained in the reaction product. Then, the resultant was filtered to remove the thus-formed salt to obtain Compound 1 represented by Formula (I-1) below.

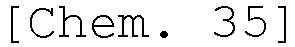

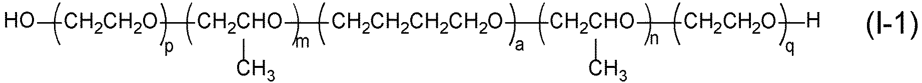

For the thus-obtained Compound 1, a number average molecular weight was calculated from a hydroxyl value determined by a hydroxyl value measurement according to JIS K1557-1:2007, and values of a, m + n, and p + q in Formula (I-1) were identified from a value of the number average molecular weight. Values of numbers of added moles a, m + n, and p + q are shown in Table 1.

The thus-obtained compound was dissolved in deuterated chloroform and then subjected to measurement using a ¹H-nuclear magnetic resonance spectrometer (JNM-ECA400II manufactured by JEOL Ltd., 400 MHz, reference material: TMS). Number average molecular weights of units were calculated to obtain a proportion of a number average molecular weight of a polyethylene oxide chain to a number average molecular weight of the resulting compound, a number average molecular weight of an R¹ chain, and a proportion of a number average molecular weight of an R¹ chain to the number average molecular weight of the resulting compound, and a proportion of a number average molecular weight of an R¹¹O chain to a number average molecular weight of an R¹ chain, which are shown in Table 1.

### (Synthesis of Compounds 2 to 5)

Compounds 2, 4, and 5 represented by Formula (I-1) above and Compound 3 represented by Formula (I-2) below were synthesized in the same manner as Compound 1, except that starting materials and added amounts of propylene oxide and ethylene oxide were changed. Values of numbers of added moles a, m + n, and p + q are shown in Table 1.

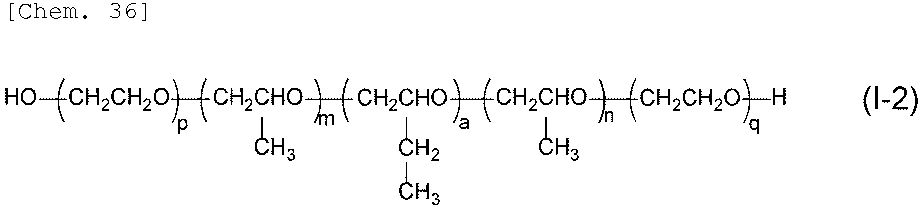

### (Synthesis of Compound 6)

First, 1,4-butanediol (70 g) and potassium hydroxide (1.4 g) serving as a catalyst were added to an autoclave. After nitrogen replacement of the air in the autoclave, the catalyst was dissolved at 120°C with stirring to obtain a first solution. Next, the first solution was placed at 120°C and 0.2 to 0.5 MPa (gauge pressure), and a mixture of propylene oxide (135 g) and tetrahydrofuran (560 g) was added dropwise thereto, followed by stirring for 5 hours to obtain a second solution. Then, at 120°C and 0.2 to 0.5 MPa (gauge pressure), ethylene oxide (550 g) was added dropwise to the second solution, followed by stirring for 1 hour. The resulting reaction product was then removed from the autoclave, the pH was adjusted to 6 to 7 with hydrochloric acid, and the resultant was dried under reduced pressure at 110°C for 1 hour (gauge pressure: 0.095 Mpa) to remove water contained in the reaction product. The resultant was filtered to remove the thus-formed salt to obtain Compound 6 represented by Formula (I-3) below. Values of numbers of added moles b, c, and p + q are shown in Table 1.

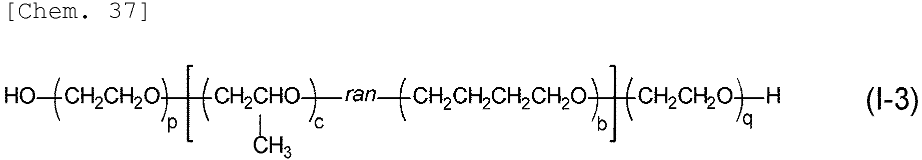

### (Synthesis of Compound 7)

Compound 5 (50 g), p-toluenesulfonic acid monohydrate (0.68 g), toluene (60 mL), and 3-mercaptopropionic acid (7.6 g) were added to a 100 mL flask. The resultant was heated to reflux for 10 hours while water was removed using a Dean-stark tube. After cooling to room temperature, the resultant was separated by washing with 1% ammonia water, and the resulting organic layer was distilled off under reduced pressure. The resultant reaction product was dissolved with the addition of dichloromethane and then washed with water three times. After drying the organic layer over magnesium sulfate, the solvent was distilled off under reduced pressure to obtain Compound 7 represented by Formula (I-4) below (yield: 90%).

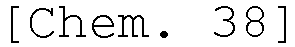

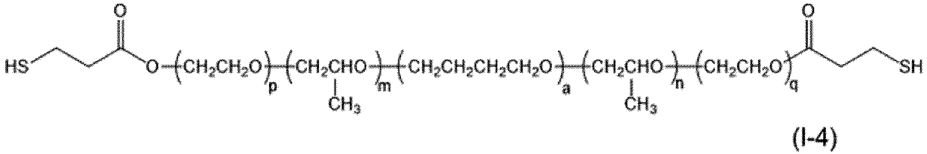

Compound 7 was measured for a proton nuclear magnetic resonance spectrum and showed the following peak: δ 1.08 - 1.17 (m, 33H), 1.62 (quint, 4H), 2.66 - 2.80 (m, 8H), 3.29 - 3.73 (m, 97H), 4.31 (m, 4H).

### (Synthesis of Compound 8)

Compound 5 (50 g), p-toluenesulfonyl chloride (14 g), and 40 mL of dichloromethane were added to a 100 mL flask and cooled to 10°C. Triethylamine (7.2 g) was then added dropwise thereto and the resultant was stirred at room temperature for 8 hours. The resulting reaction solution was washed with water three times, the resulting organic layer was dried over magnesium sulfate, and then the solvent was distilled off under reduced pressure.

Thiourea (5.5 g) and water (280 g) were then added to the resulting reaction product and the resultant was heated to reflux for 3 hours. Thereafter, the resulting reaction solution was cooled to room temperature, and hydrazine monohydrate (8.9 g) was added thereto, followed by stirring for another 18 hours. Hydrochloric acid was then added thereto to make it acidic and subjected to extraction with dichloromethane. The resulting organic layer was washed with water three times, the organic layer was dried over magnesium sulfate, and then the solvent was distilled off under reduced pressure to obtain Compound 8 represented by Formula (I-5) below (yield: 75%).

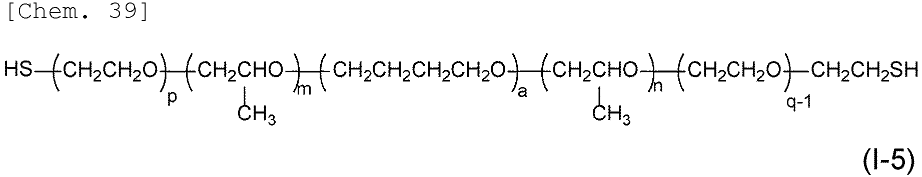

Compound 8 was measured for a proton nuclear magnetic resonance spectrum and showed the following peak: δ 1.08 - 1.17 (m, 33H), 1.62 (quint, 4H), 3.29 - 3.73 (m, 101H).

### (Synthesis of Compound 9)

After Compound 1 (50 g) and 40 mL of dichloromethane were added to a 100 mL flask and cooled to 10°C, purified acrylic acid chloride (13 g) and triethylamine (15 g) were added dropwise thereto, followed by stirring at room temperature for 5 hours. The resulting reaction solution was then washed with 3% hydrochloric acid three times and with water three times, followed by washing with a 10% sodium hydroxide solution three times and with water three times. After drying the organic layer over magnesium sulfate, the solvent was distilled off under reduced pressure to obtain Compound 9 represented by Formula (I-6) below (yield: 90%).

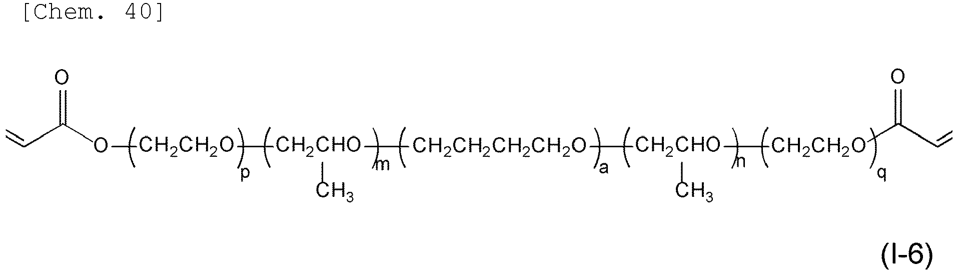

Compound 9 was measured for a proton nuclear magnetic resonance spectrum and showed the following peak: δ 1.08 - 1.17 (m, 21H), 1.62 (quint, 4H), 3.29 - 3.73 (m, 49H), 4.31 (m, 4H), 5.84 (d, 2H), 6.16 (dd, 2H), 6.43 (d, 2H).

### (Synthesis of Compound 10)

Compound 1 (50 g), 60% sodium hydride (7.5 g), and 30 mL of dry tetrahydrofuran were added to a 100 mL flask and stirred at room temperature for 1 hour. Then, allyl bromide (15 g) was added dropwise thereto and the resultant was stirred at room temperature for another 18 hours. After the solvent was distilled off under reduced pressure, dichloromethane was added thereto, followed by washing with water three times. After drying the organic layer over magnesium sulfate, the solvent was distilled off under reduced pressure to obtain Compound 10 represented by Formula (I-7) below (yield: 88%).

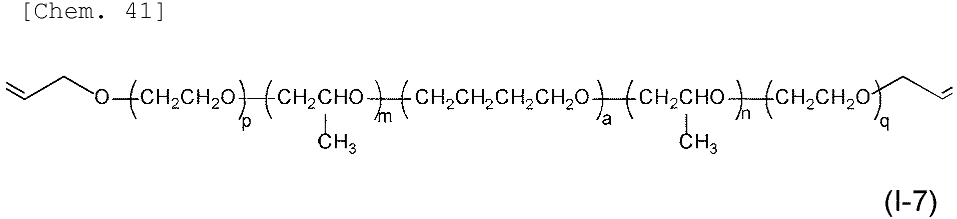

Compound 10 was measured for a proton nuclear magnetic resonance spectrum and showed the following peak: δ 1.08 - 1.17 (m, 21H), 1.62 (quint, 4H), 3.29 - 3.73 (m, 53H), 4.10 (m, 4H), 5.17 (d, 2H), 5.33 (d, 2H), 6.00 (m, 2H).

### [Table 1]

**Table 1**

| Compound No. | Starting material | Formula | X¹/X² | p+q | m+n | a | b | c |
|---|---|---|---|---|---|---|---|---|
| 1 | HO-CH₂CH₂CH₂CH₂-OH | I-1 | H | 7 | 7 | 1 | - | - |
| 2 | HO-CH₂CH₂CH₂CH₂-OH | I-1 | H | 11 | 11 | 1 | - | - |
| 3 | 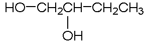 | I-2 | H | 11 | 11 | 1 | - | - |
| 4 | 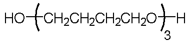 | I-1 | H | 14 | 13 | 3 | - | - |
| 5 | HO-CH₂CH₂CH₂CH₂-OH | I-1 | H | 16 | 11 | 1 | - | - |
| 6 | - | I-3 | H | 16 | - | - | 3 | 9 |
| 7 | HO-CH₂CH₂CH₂CH₂-OH | I-4 | 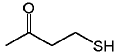 | 16 | 11 | 1 | - | - |
| 8 | HO-CH₂CH₂CH₂CH₂-OH | I-5 | -CH₂CH₂SH | 16 | 11 | 1 | - | - |
| 9 | HO-CH₂CH₂CH₂CH₂-OH | I-6 | 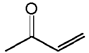 | 7 | 7 | 1 | - | - |
| 10 | HO-CH₂CH₂CH₂CH₂-OH | I-7 | 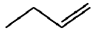 | 7 | 7 | 1 | - | - |

### [Table 2]

**Table 2**

| Compound No. | Number average molecular weight | EO (%, Mn/Mn) | Number average molecular weight of R¹ group | R¹ group (%, Mn/Mn) | R¹¹O chain/R¹ group (%, Mn/Mn) |
|---|---|---|---|---|---|
| 1 | 809 | 39 | 480 | 59 | 15 |
| 2 | 1228 | 40 | 720 | 59 | 10 |
| 3 | 1192 | 39 | 710 | 60 | 10 |
| 4 | 1583 | 38 | 970 | 61 | 22 |
| 5 | 1457 | 50 | 715 | 49 | 10 |
| 6 | 1442 | 48 | 740 | 51 | - |
| 7 | 1608 | 44 | 710 | 44 | 10 |
| 8 | 1464 | 48 | 710 | 48 | 10 |
| 9 | 912 | 34 | 478 | 52 | 15 |
| 10 | 884 | 35 | 478 | 54 | 15 |

In Table 2, a column labeled "Number average molecular weight" shows a number average molecular weight of each of optical material compounds, a column labeled "EO (%, Mn/Mn)" shows a proportion of a number average molecular weight of a polyethylene oxide chain to a number average molecular weight of each of optical material compounds, a column labeled "Number average molecular weight of R¹ group" shows a number average molecular weight of an R¹ group, a column labeled "R¹ group (%, Mn/Mn)" shows a proportion of a number average molecular weight of an R¹ group to a number average molecular weight of each of optical material compounds, and a column labeled "R¹¹O chain/R¹ group (%, Mn/Mn)" show a proportion of a number average molecular weight of an R¹¹O chain to a number average molecular weight of an R¹ group.

### [Optical material composition and cured product]

Photochromic optical articles were produced using Compounds 1 to 10. The following materials and evaluation methods were used.

### <Production of urethane optical material composition and cured product>

### <Functional dye>

PC1: Compound represented by the following formula:

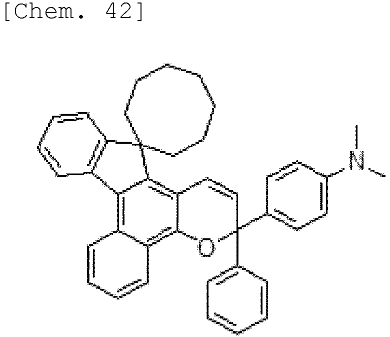

PC2: Compound represented by the following formula:

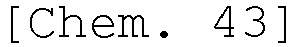

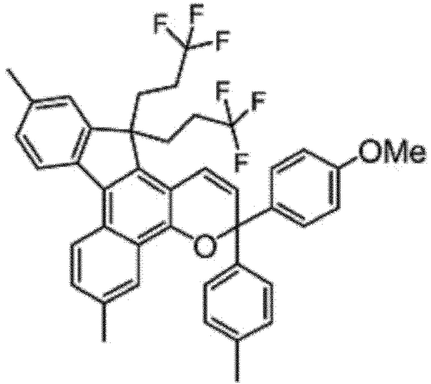

PC3: Compound represented by the following formula:

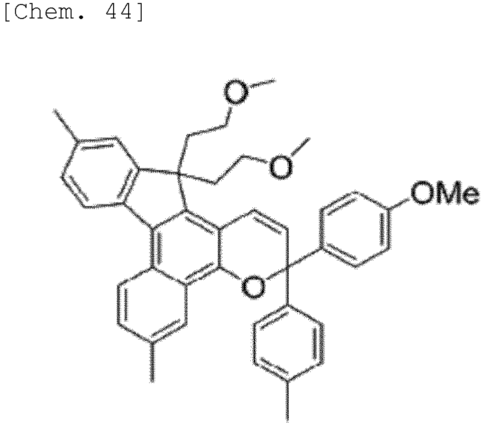

PC4: Compound represented by the following formula:

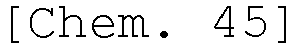

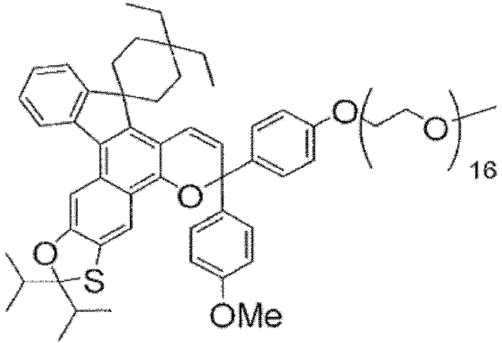

### <Polyisocyanate compound>

NBDI: Norbornane diisocyanate
1,3-H6XDI: 1,3-bis(isocyanatomethyl)cyclohexane
1,4-H6XDI: 1,3-bis(isocyanatomethyl)cyclohexane

### <Active hydrogen-containing compound>

TMMP: Trimethylolpropane tris(3-mercaptopropionate)
PEMP: Pentaerythritol tetrakis(3-mercaptopropionate)
DPMP: Dipentaerythritol hexakis(3-mercaptopropionate)

### <Optical material compound>

### Compounds (1) to (8)

L-31: Diol having an average molecular weight of 1100 shown below. Average values of x and z are both 1 and an average value of y is 17.

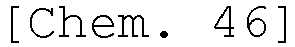

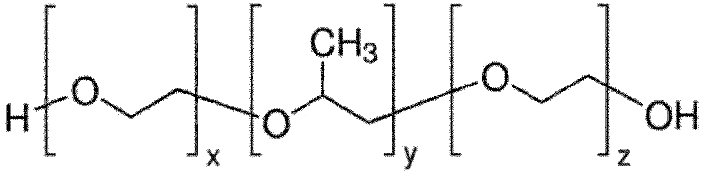

### <Additives>

Antioxidizing agent: Irganox 245 (0.1 parts by mass) manufactured by BASF Japan Ltd. Ultraviolet absorbing agent: Uvinul MC80 (0.6 parts by mass) manufactured by BASF Japan Ltd. Curing accelerating agent: Dimethylchlorotin (0.05 parts by mass)
Note that, the above-described additives are described with blended ratios taking a total of a polyisocyanate compound, an active hydrogen-containing compound, and an optical material compound as 100 parts by mass.

### (Example 1)

Curable compositions were prepared by mixing components as shown in Table 3. After each of the thus-prepared curable compositions was thoroughly defoamed, it was poured into a glass mold with a gap of 2 mm to polymerize the curable composition by casting polymerization. The polymerization was performed in an air furnace for 18 hours with a temperature gradually increased from 27°C to 120°C. After the polymerization, the resulting cured product was removed from the glass mold to obtain a cured product (optical article) with a thickness of 2 mm.

### (Examples 2 to 8, Comparative Example 1)

Cured products were prepared in the same manner as in Example 1, except that the formulation was changed to those shown in Table 3.

### (Example 9, Comparative Example 2)

Photochromic cured products (photochromic optical articles) were prepared in the same manner as in Example 1, except that the formulation was changed to those shown in Table 4.

### [Evaluation method]

### <Cloudiness>

The resulting photochromic cured products were visually evaluated for a degree of cloudiness. The results are shown in Table 3.
1: No cloudiness is recognized by evaluation with a condenser.
2: Cloudiness is recognized and transparency is also recognized by evaluation with a condenser.
3: Cloudiness and no transparency are recognized by evaluation with a condenser.
4: No transparency is recognized by visual evaluation under fluorescent light.

### <Photochromic property>

Photochromic cured products obtained in Example 9 and Comparative Example 2 were evaluated by the below-described method. The results are shown in Table 4. A spectrophotometer manufactured by Otsuka Electronics Co., Ltd. (instantaneous multichannel photodetector MCPD3000) was used to measure the following values:
Maximum absorption wavelength (Amax): Maximum absorption wavelength after color development
Color developing density: Difference between an absorbance (A₃₀₀) after irradiation with light at 23°C for 300 seconds and an absorbance (A₀) when not irradiated with light at the above-mentioned maximum absorption wavelength
Color fading half-life [τ_{1/2}(sec)]: Period of time taken by an absorbance at the above-mentioned maximum absorption wavelength of a sample to decrease to 1/2 of {A₃₀₀ - A₀} when irradiation is stopped after irradiation with light at 23°C for 300 seconds

### <Durability>

Residual ratio = [(A₉₆) / (A₀) x 100]: Photochromic cured product was subjected to accelerated degradation for 96 hours using a xenon weather meter X25 manufactured by Suga Test Instruments Co., Ltd. Color developing densities were evaluated before and after the accelerated degradation test, and a color developing density of the photochromic cured product before the test (A₀) and a color developing density of the photochromic cured product after the test (A₉₆) were determined. A ratio (A₉₆/A₀) was determined as a residual ratio and was used as an index of color development durability. A higher residual ratio means more durable color development. The results are shown in Table 4.

### [Table 3]

**Table 3**

| | Curable composition | | | | Cured product |
|---|---|---|---|---|---|
| | Functional dye | Matrix | | Optical material compound | Cloudiness |
| | | Isocyanate compound | Active hydrogen compound | | |
| Example 1 | - | NBDI (36) | PEMP (44) | Compound 1 (20) | 1 |
| Example 2 | - | NBDI (36) | PEMP (44) | Compound 2 (20) | 1 |
| Example 3 | - | NBDI (36) | PEMP (44) | Compound 3 (20) | 2 |
| Example 4 | - | NBDI (36) | PEMP (44) | Compound 4 (20) | 3 |
| Example 5 | - | NBDI (36) | PEMP (44) | Compound 5 (20) | 1 |
| Example 6 | - | NBDI (36) | PEMP (44) | Compound 6 (20) | 1 |
| Example 7 | FD1 (2) | NBDI (36) | PEMP (44) | Compound 1 (20) | 1 |
| Example 8 | FD2 (0.5) | NBDI (36) | PEMP (44) | Compound 5 (20) | 1 |
| Comparative example 1 | - | NBDI (36) | PEMP (44) | L-31 (20) | 4 |

### [Table 4]

**Table 4**

| | Curable composition | | | | Cured product | | | | |
|---|---|---|---|---|---|---|---|---|---|
| | | | | | Cloudiness | Photochromic property (23°C) | | | Durability |
| | Functional dye | Matrix | | Optical material compound | | λₘₐₓ (nm) | Color developing density | τ_{1/2} (sec) | Residual ratio (%) |
| | | Isocyanate compound | Active hydrogen compound | | | | | | |
| Example 9 | FD3 (0.05) | NBDI (36) | PEMP (44) | Compound 1 (20) | 1 | 590 | 0.64 | 110 | 92 |
| Comparative example 2 | FD3 (0.05) | NBDI (36) | PEMP (44) | - | 1 | 590 | 0.05 | >300 | 95 |

### (Examples 16 to 28, Comparative Example 3)

Photochromic cured products were prepared in the same manner as in Example 1, except that the formulation was changed to those shown in Table 5. The evaluation results are shown in Table 5.

### [Table 5]

**Table 5**

| | Optical material composition (part(s) by mass) | | | | Cured product | | | | |
|---|---|---|---|---|---|---|---|---|---|
| | | | | | Photochromic property (23°C) | | | Durability | Cloudiness |
| | Functional dye | Matrix | | Optical material compound | λₘₐₓ (nm) | Color developing density | τ_{1/2} (sec) | Residual ratio (%) | |
| | | Isocyanate compound | Active hydrogen compound | | | | | | |
| Example 16 | PC1 (0.05) | 1,4-H6XDI (38) | PEMP (42) | Compound 1 (20) | 590 | 0.64 | 110 | 92 | 1 |
| Example 17 | PC1 (0.05) | 1,3-H6XDI (36) | DPMP (44) | Compound 2 (20) | 590 | 0.95 | 40 | 92 | 1 |
| Example 18 | PC2 (0.1) | 1,3-H6XDI (36) | DPMP (44) | Compound 2 (20) | 560 | 1.10 | 65 | 90 | 1 |
| Example 19 | PC3 (0.1) | 1,3-H6XDI (36) | DPMP (44) | Compound 2 (20) | 565 | 1.10 | 85 | 91 | 1 |
| Example 20 | PC4 (0.1) | 1,3-H6XDI (36) | DPMP (44) | Compound 2 (20) | 570 | 1.00 | 38 | 89 | 1 |
| Example 21 | PC1 (0.05) | 1,3-H6XDI (40) | DPMP (52) | Compound 2 (8) | 590 | 0.32 | 170 | 93 | 1 |
| Example 22 | PC1 (0.05) | 1,3-H6XDI (35) | DPMP (40) | Compound 2 (25) | 590 | 1.00 | 37 | 88 | 2 |
| Example 23 | PC1 (0.05) | NBDI (37) | DPMP (43) | Compound 3 (20) | 590 | 0.96 | 38 | 91 | 2 |
| Example 24 | PC1 (0.05) | 1,3-H6XDI (36) | PEMP (44) | Compound 4 (20) | 590 | 0.98 | 30 | 88 | 3 |
| Example 25 | PC1 (0.05) | 1,3-H6XDI (36) | DPMP (44) | Compound 5 (20) | 590 | 0.94 | 40 | 94 | 1 |
| Example 26 | PC1 (0.05) | NBDI (36) | TMMP/DPMP (12/32) | Compound 6 (20) | 590 | 0.94 | 39 | 93 | 1 |
| Example 27 | PC1 (0.05) | 1,3-H6XDI (36) | DPMP (44) | Compound 7 (20) | 590 | 0.95 | 39 | 90 | 1 |
| Example 28 | PC1 (0.05) | 1,3-H6XDI (36) | DPMP (44) | Compound 8 (20) | 590 | 0.94 | 40 | 91 | 1 |
| Comparative example 3 | PC1 (0.05) | 1,3-H6XDI (43) | DPMP (57) | - | 590 | 0.05 | >300 | 95 | 1 |

### <Production of acrylic optical material composition and cured product>

### <Functional dye>

### PC1 to PC4

### <(Meth)acrylate compound>

TMPT: Trimethylolpropane trimethacrylate
A400: Polyethylene glycol diacrylate (average value of ethyleneoxy group repeating unit: 9)
DTMP: Ditrimethylolpropane tetramethacrylate
GMA: Glycidyl methacrylate
PR1: Acrylic modified polyrotaxane synthesized by the method described in WO 2018/235771. This is a compound in which an axial molecule is formed of polyethylene glycol with a molecular weight of 11000, bulky groups at both ends are adamantyl groups, a cyclic molecule is α-cyclodextrin, and 3.5 molecules on average of ε-caprolactone is ring-opening polymerized via an oxypropylene groups.

Properties of pr2 are described below. Inclusion amount of α-cyclodextrin: 0.25. Degree of modification of side chain: 0.5. Molecular weight of side chain: about 100 on average. Molecular weight of chain including polymerizable group (acrylic group): about 650 on average (excluding polymerizable group). Weight average molecular weight: 200000. The results showed that pr2 had a structure in which 50% of side chains had an acrylic group introduced as a polymerizable group and 50% of the side chains had an OH group at an end.
¹H-NMR measurement revealed that a chain having about 140 polymerizable groups (acrylic groups) on average per molecule was introduced.

### <Optical material compound>

### Compounds (9) to (10)

### <Additives>

Antioxidizing agent: Irganox 245 (1 part by mass) manufactured by BASF Japan Ltd. Light stabilizing agent: Tinuvin 765 (3 parts by mass) manufactured by BASF Japan Ltd. Leveling agent: L7001 (0.1 parts by mass) manufactured by Dow Toray Co., Ltd. Photoinitiating agent: Omnirad 819 (0.3 mass parts) manufactured by IGM Resins B.V. Note that, the above-described additives are described with blended ratios taking a total of a (meth)acrylate compound and an optical material compound as 100 parts by mass.

### (Examples 29 to 33, Comparative Example 4)

Optical material compositions were prepared by mixing components according to formulations shown in Table 6. Then, a thiourethane plastic lens with a center thickness of 2 mm and a refractive index of 1.60 was prepared as an optical substrate. Note that, the thiourethane plastic lens had been alkaline-etched in a 10% sodium hydroxide aqueous solution at 50°C for 5 minutes in advance, and then thoroughly washed with distilled water.

A spin coater (1H-DX2, manufactured by MIKASA CO., LTD) was used to coat a surface of the above-mentioned plastic lens with a moisture-curing primer (product name: TR-SC-P, manufactured by Tokuyama Corporation) at a rotation speed of 70 rpm for 15 seconds, followed by at 1000 rpm for 10 seconds. Then, about 2 g of the optical material composition obtained as above was spin-coated at a rotation speed of 60 rpm for 40 seconds, followed by at 600 rpm for 10 to 20 seconds so as to give a coating layer with a film thickness of 40 µm.

The lens of which surface had been coated with such a coating agent was irradiated with light for 90 seconds in a nitrogen gas atmosphere using a metal halide lamp with an output of 200 mW/cm² to cure the coated film. Then, the resultant was further heated at 110°C for 1 hour to obtain a photochromic optical article in which a surface of the plastic lens had been coated with a photochromic cured product. The resulting photochromic optical article was evaluated in the same manner as Example 15 and the evaluation results are shown in Table 6.

### [Table 6]

**Table 6**

| | Optical material composition (part(s) by mass) | | | Cured product | | | | |
|---|---|---|---|---|---|---|---|---|
| | | | | Photochromic property (23°C) | | | Durability | Cloudiness |
| | Functional dye | Matrix | Optical material compound | λₘₐₓ (nm) | Color developing density | τ_{1/2} (sec) | Residual ratio (%) | |
| | | (Meth) acrylate | | | | | | |
| Example 29 | PC1 (1) | TMPT (15) | Compound 9 (45) | 590 | 0.60 | 30 | 80 | 1 |
| Example 30 | PC2 (2) | | | 570 | 0.89 | 45 | 82 | 1 |
| Example 31 | PC3 (2) | A400 (21) | | 575 | 0.90 | 65 | 83 | 1 |
| | | DTMP (15) | | | | | | |
| | | GMA (1) | | | | | | |
| Example 32 | PC4 (2) | PR1 (3) | | 590 | 0.65 | 28 | 80 | 1 |
| Example 33 | PC1 (1) | | Compound 10 (45) | 590 | 0.60 | 30 | 80 | 1 |
| Comparative example 4 | PC1 (1) | TMPT (27) | - | 590 | 0.03 | >300 | 95 | 1 |
| | | A400 (38) | | | | | | |

### (Production of urethane-urea prepolymer and laminate)

### <Functional dye>

### PC1

### <Polyisocyanate compound>

IPDI: Isophorone diisocyanate

### <Active hydrogen-containing compound>

PCD: DURANOL manufactured by Asahi Kasei Corporation (Mn. 1000, hydroxyl value 114.1)
MBCHA: 4,4'-methylenebis(cyclohexylamine)

### <Optical material compound>

### Compound (5)

### <Solvent>

DEK: Diethyl ketone
TBA: tert-butyl alcohol

### <Additives>

Antioxidizing agent: Irganox 245 (0.35 parts by mass) manufactured by BASF Japan Ltd. Leveling agent: L7001 (0.05 parts by mass) manufactured by Dow Toray Co., Ltd. Note that, the above-described additives are described with blended ratios taking a prepolymer as 100 parts by mass.

### (Example 34)

### Production of urethane-urea prepolymer:

A 2 L reaction vessel was charged with 100 g of IPDI, 470 g of Compound 5, and 60 g of DEK to obtain a mixture. The mixture was stirred at 150 rpm at 100°C for 5 hours under a nitrogen atmosphere to obtain a reaction solution including a urethane prepolymer. An endpoint of the reaction was confirmed by back titration of an isocyanate group.

The resulting reaction solution was then cooled to 10°C, 760 g of DEK and 200 g of TBA were added thereto, and a liquid temperature was maintained at 15°C. Then, 21.3 g of MBCHA was added dropwise to this reaction solution and reacted at 15°C for 1 hour to obtain a urethane-urea prepolymer PRE1 of interest. Note that, the thus-obtained PRE1 had a solid concentration of 37.4% by mass, a number average molecular weight of 16000, and a softening point of 96°C.

Next, 100 g of PRE1, 1.00 g of PC1, 0.35 g of Irganox 245, and 0.05 g of L7001 were mixed and stirred at room temperature to obtain an adhesive optical material composition AC1 including the PRE1.

### Production of laminate:

A PET (polyethylene terephthalate) film (PUREX film manufactured by Teijin-DuPont Films Incorporated, with silicon coated film) was coated with the adhesive optical material composition AC1 including the PRE1 using a bar coater to obtain a coated film. After drying this coated film at 100°C for 5 minutes, the PET film was peeled off to obtain a photochromic adhesive sheet with a thickness of about 30 µm. The resulting photochromic adhesive sheet was then sandwiched between two sheets of polyvinyl alcohol film (thickness: 75 µm) and laminated together to obtain a laminate. Note that, the laminate was in a form of a rectangular strip. One of longitudinal sides of the laminate was not coated with the adhesive composition, leaving it as an uncoated area.

The laminate was heated at 100°C for 6 hours while being restrained on all sides to prevent shrinkage. The thus-heated laminate was vacuum-dried for 5 hours under conditions at room temperature and 13 Torr to obtain Photochromic binder sheet 1 The resulting photochromic optical article was evaluated in the same manner as Example 15 and the evaluation results are shown in Table 6.

### (Comparative Example 5)

### Production of urethane-urea prepolymer:

A prepolymer PRE2 of interest was produced in the same manner as in Example 34, except that PCD (315 g) was used instead of Compound 5. Note that, the thus-obtained PRE2 had a solid concentration of 37.6% by mass, a number average molecular weight of 13000, and a softening point of 98°C.

An adhesive optical material composition AC2 including the PRE2 was also prepared in the same manner as in Example 34 using the formulation shown in Table 6.

### Production of laminate:

Photochromic binder sheet 2 was obtained in the same manner as in Example 34 using the adhesive optical material composition AC2 including the PRE2. The evaluation results for the resulting photochromic optical article are shown in Table 7 in the same manner as Example 34.

### [Table 7]

**Table 7**

| | Prepolymer formulation (g) | | | | Optical material composition | | Laminate | | | | |
|---|---|---|---|---|---|---|---|---|---|---|---|
| | | | | | | | Photochromic property | | | Durability | Cloudiness |
| | Isocyanate compound | Active hydrogen compound | Optical material compound | Solvent | Functional dye | Prepolymer | λₘₐₓ (nm) | Color developing density | τ_{1/2} (sec) | Residual ratio (%) | |
| Example 34 | IPDI (100) | MBCHA (21.3) | Compound 5 (470) | DEK/TBA (820/200) | PC1 (1) | PRE1 (100) | 590 | 1.15 | 35 | 95 | 1 |
| Comparative example 5 | IPDI (100) | PCD/MBCH A (315/21. 3) | - | DEK/TBA (600/150) | PC1 (1) | PRE2 (100) | 590 | 1. 10 | 40 | 90 | 1 |

### <Production of glass laminated photochromic optical article>

### (Example 35)

An optical material composition was prepared by mixing components according to the formulation shown in Table 8. A photochromic optical article was then produced by bonding a pair of glass plates for an optical article (thickness: 0.8 mm) using the thus-prepared optical material composition as an adhesive. First, one of the glass plates for an optical article on which a 0.1 mm thick spacer was disposed was coated with the optical material composition and then the other of the glass plates for an optical article was placed on top of it. Thereafter, the optical material composition was polymerized. The polymerization was performed in an air furnace with the temperature gradually increased from 27°C to 120°C for 18 hours to cure the composition and bond the pair of plates for an optical article to each other. Thus, a glass-laminated photochromic optical article having a photochromic layer with a thickness of 0.1 mm was obtained.

The resulting photochromic optical article was evaluated in the same manner as Example 15 and the evaluation results are shown in Table 8.

### [Table 8]

**Table 8**

| | Optical material composition (part(s) by mass) | | | | Cured product | | | | |
|---|---|---|---|---|---|---|---|---|---|
| | | | | | Photochromic property (23°C) | | | Durability | Cloudiness |
| | Functional dye | Matrix | | Optical material compound | λₘₐₓ (nm) | Color developing density | τ_{1/2} (sec) | Residual ratio (%) | |
| | | Isocyanat e compound | Active hydrogen compound | | | | | | |
| Example 35 | PC1 (1) | 1,3-H6XDI | DPMP (37) | Compound 5 (30) | 590 | 1.05 | 34 | 87 | 1 |

| | | | | | | | | | |
|---|---|---|---|---|---|---|---|---|---|
| Note that, in Tables 3 to 8, numbers in parentheses refer to part(s) by mass. | | | | | | | | | |

## Claims

1. An optical material composition comprising:
an optical material compound represented by Formula (I) below; and
at least one compound selected from the group consisting of a compound having a radical-polymerizable group, a compound having a polyaddition-reactive group, and a compound having a reactive group reactive with the polyaddition-reactive group, 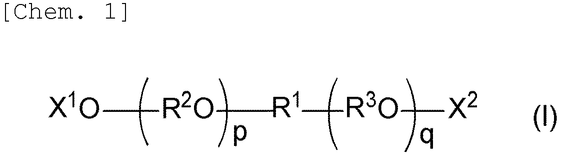
wherein
p and q are each independently 1 or more and 43 or less;
p + q is 2 or more and 44 or less;
X¹ and X² are each independently a hydrogen atom, a mercaptoethyl group, a 3-mercaptopropanoyl group, an allyl group, an acryloyl group, or a methacryloyl group;
R¹ is a divalent group represented by Formula (Ia) or (Ib) below; and
R² and R³ are a methylene group or an ethylene group; 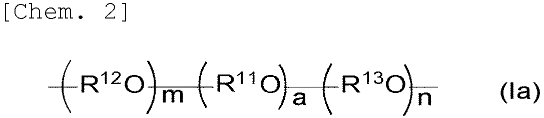
wherein
R¹¹ is a linear or branched alkylene group having 2 or more and 10 or less carbon atoms;
R¹² and R¹³ are a linear or branched alkylene group having 3 or more and 10 or less carbon atoms and having a structure different from that of R¹¹;
a is 1 or more and 27 or less;
m and n are each independently 1 or more and 32 or less; and
m + n is 2 or more and 32 or less; 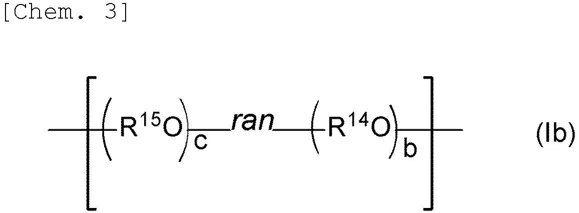
wherein
R¹⁴ is a linear or branched alkylene group having 3 or more and 10 or less carbon atoms;
R¹⁵ is a linear or branched alkylene group having 3 or more and 10 or less carbon atoms and having a structure different from that of R¹⁴;
b is 1 or more and 25 or less; and
c is 1 or more and 31 or less.

2. The optical material composition according to claim 1, wherein the optical material compound has a number average molecular weight of 500 or more and 2000 or less as calculated from a hydroxy group value according to Japanese Industrial Standard K 1557-1:2007 or a nuclear magnetic resonance (NMR) method.

3. The optical material composition according to claim 1, wherein the optical material composition has a proportion of a sum of a number average molecular weight of an R²O chain as determined by an NMR method and a number average molecular weight of an R³O chain as determined by an NMR method to a number average molecular weight of the optical material compound of 4% or more and 97% or less.

4. The optical material composition according to claim 1, wherein the optical material composition has a proportion of a number average molecular weight of an R¹ group as determined by an NMR method to a number average molecular weight of the optical material compound is 3% or more and 96% or less.

5. The optical material composition according to claim 1, wherein the radical-polymerizable group comprises at least one functional group selected from the group consisting of an acryloyl group, a methacryloyl group, and an allyl group.

6. The optical material composition according to claim 1, wherein the polyaddition-reactive group comprises at least one functional group selected from the group consisting of an isocyanate group, an isothiocyanate group, and an epoxy group.

7. The optical material composition according to claim 1, wherein the reactive group comprises at least one functional group selected from the group consisting of a hydroxy group, an amino group, a mercapto group, and a carboxy group.

8. The optical material composition as claimed in claim 1, wherein the optical material compound comprises 5% by mass or more and 60% by mass or less of the optical material composition.

9. The optical material composition according to claim 1, further comprising a functional dye.

10. The optical material composition according to claim 1, further comprising a photochromic compound.

11. The optical material composition according to claim 1, wherein the optical material composition comprises the compound having a radical-polymerizable group, or the compound having a polyaddition-reactive group and the reactive group reactive with the polyaddition-reactive group.

12. A cured product of the optical material composition according to claim 1.

13. An optical article comprising the cured product according to claim 12.

14. A lens comprising the cured product according to claim 12.

15. Glasses comprising the lens according to claim 14.

## Amended claims

### Amended claims under Art. 19.1 PCT

1. (Original) An optical material composition comprising:
an optical material compound represented by Formula (I) below; and
at least one compound selected from the group consisting of a compound having a radical-polymerizable group, a compound having a polyaddition-reactive group, and a compound having a reactive group reactive with the polyaddition-reactive group, 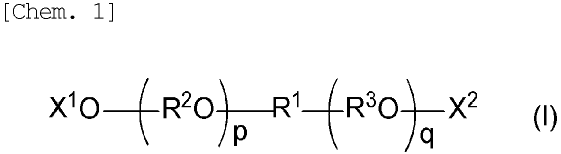
wherein
p and q are each independently 1 or more and 43 or less;
p + q is 2 or more and 44 or less;
X¹ and X² are each independently a hydrogen atom, a mercaptoethyl group, a 3-mercaptopropanoyl group, an allyl group, an acryloyl group, or a methacryloyl group;
R¹ is a divalent group represented by Formula (Ia) or (Ib) below; and
R² and R³ are a methylene group or an ethylene group; 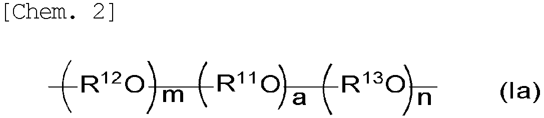
wherein
R¹¹ is a linear or branched alkylene group having 2 or more and 10 or less carbon atoms;
R¹² and R¹³ are a linear or branched alkylene group having 3 or more and 10 or less carbon atoms and having a structure different from that of R¹¹;
a is 1 or more and 27 or less;
m and n are each independently 1 or more and 32 or less; and
m + n is 2 or more and 32 or less; 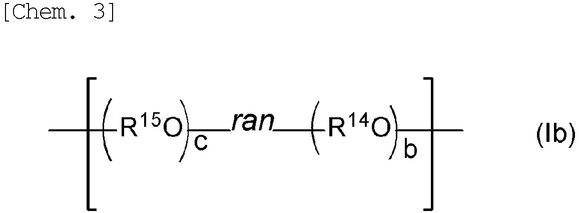
wherein
R¹⁴ is a linear or branched alkylene group having 3 or more and 10 or less carbon atoms;
R¹⁵ is a linear or branched alkylene group having 3 or more and 10 or less carbon atoms and having a structure different from that of R¹⁴;
b is 1 or more and 25 or less; and
c is 1 or more and 31 or less.

2. (Original) The optical material composition according to claim 1, wherein the optical material compound has a number average molecular weight of 500 or more and 2000 or less as calculated from a hydroxy group value according to Japanese Industrial Standard K 1557-1:2007 or a nuclear magnetic resonance (NMR) method.

3. (Original) The optical material composition according to claim 1, wherein the optical material composition has a proportion of a sum of a number average molecular weight of an R²O chain as determined by an NMR method and a number average molecular weight of an R³O chain as determined by an NMR method to a number average molecular weight of the optical material compound of 4% or more and 97% or less.

4. (Original) The optical material composition according to claim 1, wherein the optical material composition has a proportion of a number average molecular weight of an R¹ group as determined by an NMR method to a number average molecular weight of the optical material compound is 3% or more and 96% or less.

5. (Original) The optical material composition according to claim 1, wherein the radical-polymerizable group comprises at least one functional group selected from the group consisting of an acryloyl group, a methacryloyl group, and an allyl group.

6. (Original) The optical material composition according to claim 1, wherein the polyaddition-reactive group comprises at least one functional group selected from the group consisting of an isocyanate group, an isothiocyanate group, and an epoxy group.

7. (Original) The optical material composition according to claim 1, wherein the reactive group comprises at least one functional group selected from the group consisting of a hydroxy group, an amino group, a mercapto group, and a carboxy group.

8. (Original) The optical material composition as claimed in claim 1, wherein the optical material compound comprises 5% by mass or more and 60% by mass or less of the optical material composition.

9. (Original) The optical material composition according to claim 1, further comprising a functional dye.

10. (Original) The optical material composition according to claim 1, further comprising a photochromic compound.

11. (Original) The optical material composition according to claim 1, wherein the optical material composition comprises the compound having a radical-polymerizable group, or the compound having a polyaddition-reactive group and the reactive group reactive with the polyaddition-reactive group.

12. (Original) A cured product of the optical material composition according to claim 1.

13. (Original) An optical article comprising the cured product according to claim 12.

14. (Original) A lens comprising the cured product according to claim 12.

15. (Original) Glasses comprising the lens according to claim 14.

16. (Currently amended) The optical material composition according to claim 1,
wherein in Formula (Ia) and Formula (Ib),
R¹¹ and R¹⁴ are a linear alkylene group having 3 or more and 10 or less carbon atoms; and
R¹², R¹³, and R¹⁵ are a branched alkylene group having 3 or more and 10 or less carbon atoms.

17. (Currently amended) The optical material composition according to claim 1,
wherein in Formula (Ia) and Formula (Ib),
R¹¹ and R¹⁴ are a normal butylene group.
